(19) Europäisches Patentamt
European Patent Office
Office européen des brevets

(11) **EP 0 772 029 B1**

(12) **EUROPÄISCHE PATENTSCHRIFT**

(45) Veröffentlichungstag und Bekanntmachung des Hinweises auf die Patenterteilung:
**24.07.2002 Patentblatt 2002/30**

(51) Int Cl.$^7$: **G01J 3/02**, G01N 21/03

(21) Anmeldenummer: **97100430.4**

(22) Anmeldetag: **13.08.1993**

(54) **Spektroskopische Systeme zur Analyse von kleinen und kleinsten Substanzmengen**

Spectroscopic systems for the analysis of small and very small quantities of substances

Systèmes spectroscopiques pour analyser de faibles et d'infimes quantités de substances

(84) Benannte Vertragsstaaten:
**CH DE ES FR GB IT LI**

(30) Priorität: **13.08.1992 DE 4226884**
**15.03.1993 DE 4308202**

(43) Veröffentlichungstag der Anmeldung:
**07.05.1997 Patentblatt 1997/19**

(62) Dokumentnummer(n) der früheren Anmeldung(en) nach Art. 76 EPÜ:
**93917790.3 / 0 655 128**

(73) Patentinhaber: **Mächler, Meinrad**
**73479 Ellwangen (DE)**

(72) Erfinder: **Mächler, Meinrad**
**73479 Ellwangen (DE)**

(74) Vertreter: **DIEHL GLAESER HILTL & PARTNER**
**Patentanwälte**
**Augustenstrasse 46**
**80333 München (DE)**

(56) Entgegenhaltungen:
| | |
|---|---|
| **DE-A- 1 472 069** | **DE-U- 9 013 325** |
| **FR-A- 2 643 147** | **GB-A- 2 116 707** |
| **US-A- 4 379 225** | **US-A- 4 660 974** |
| **US-A- 5 042 893** | |

• **PATENT ABSTRACTS OF JAPAN vol. 10, no. 298 (P-505) [2354] , 9.Oktober 1986 & JP 61 114146 A (HITACHI LTD), 31.Mai 1986,**

EP 0 772 029 B1

## Beschreibung

Die Erfindung betrifft spektroskopische Systeme zur Analyse von kleinen und kleinsten Substanzmengen, insbesondere im Bereich der HPLC.

Zur Analyse von Substanzen werden in der Chemie oder Biologie häufig spektroskopische Methoden verwendet.

Die Druckschrift FR-A-2643147 offenbart ein Verfahren und eine Vorrichtung zur spektralen Photometrie von Flüssigkeiten. Die zu untersuchende Flüssigkeit wird mittels Kegelkörper senkrecht in ihrer Strömungsrichtung von Strahlung durchsetzt. Dazu sind die großen Endflächen der Kegelkörper auf die zu untersuchende Flüssigkeit gerichtet.

Die Druckschriften DE-U-9013325 und GB-A-2116707 offenbaren optische Systeme zur Untersuchung von Flüssigkeiten, wobei als wesentliche optische Elemente Linsen zur Führung der Lichter verwendet werden.

Jedoch werden in diesen Druckschriften keine Verfahren zur Analyse von kleinen und kleinsten Substanzmengen angestrebt und spezifische Probleme der Mikroanalytik werden nicht behandelt.

Weiterhin offenbart die Druckschrift US-A-4379235 die Verwendung von fiberoptischen Bündeln in einem Scannerkopf zur Verbesserung der räumlichen Auflösung des Scanners.

Der Erfindungskomplex ist zweckorientiert auf die Analytik an sehr kleinen Substanzmengen. Das heißt zwangsläufig, daß die Probenräume wegen der größtmöglichen Schichtlänge auf fadenförmige Zylinder zusammenschrumpfen. Weil es die parallele Durchstrahlung nicht geben kann, ist man auf Näherungslösungen angewiesen, von denen bevorzugte im Rahmen dieser Erfindung beschrieben werden.

Das vom Anmelder entwickelte Simultanspektrometer weist eine höhere Öffnung auf als alle anderen ähnlichen Geräte und erzielt damit den höchsten energetischen Wirkungsgrad und die beste spektrale Auflösung. Diese hohe Öffnung bringt eine Einschränkung mit sich. Eine sogenannte "vollständige Abbildung" (in der Mikroskopie: Köhler'sches Prinzip) ist mit einer Linsenoptik nicht mehr möglich, weil die sphärischen und chromatischen Fehler den Übertragungsgrad begrenzen. (In der Mikroskopie kann man sich mit Immersion helfen). Die Lösung liegt daher bei einer asphärischen Spiegeloptik.

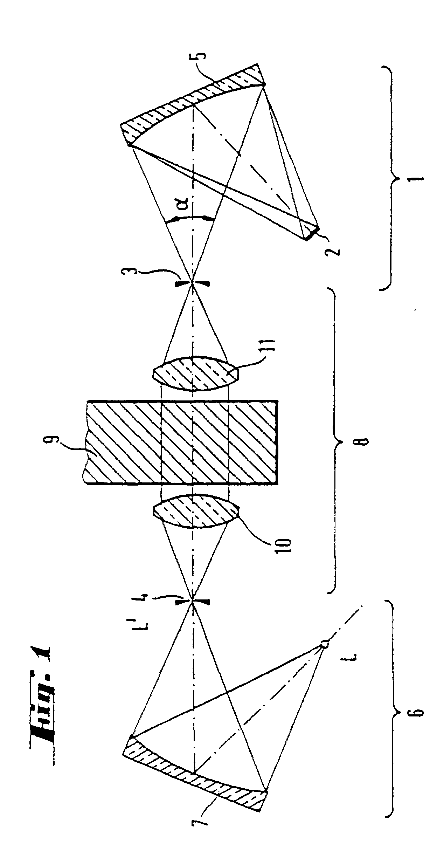

Fig. 1 zeigt ein bekanntes spektroskopisches System, bei dem als Spektrometer ein Simultanspektrometer verwendet ist.

Kernpunkt des Simultanspektrometers 1 ist die Verwendung von selbstabtastenden Diodenzeilen 2, welche von Snow 1975 entwickelt wurden und beispielsweise 512 Einzeldioden auf 1,27 cm Länge enthalten. Die Dioden in Siliciumtechnik bestimmen den nutzbaren Spektralbereich des Simultanspektrometers 1 von etwa 200 bis 1000 nm. Die vom Anmelder entwickelte Verwendung der Diodenzeilen 2 in einem Spektrometer wird bestimmt durch die Zeilengeometrie, wobei eine Diodenbreite von 25 µm zugleich die Breite des Austrittsspalts 3 des Spektrometers festlegt. Bei einer Abbildung mit der kleinsten Fehlerquote, d.h. 1:1, ist das auch die Breite des Eintrittsspalts 3. Die Spektrenlänge von 12,52 mm ist für ein analytisch interessantes Spektrum, z.B. das sichtbare Gebiet mit 400 bis 800 nm, extrem kurz bei einer befriedigenden Bandbreite von 0,8 nm. Diese ungewöhnlich kleine Lineardispersion bedeutet eine ebenfalls sehr kurze Schnittweite des Spektralapparates, was primär ein kleines Dispersionselement zur Folge hätte. Damit ist aber die spektrale Auflösung (Rayleigh-Kriterium) für die 0,8 nm Bandbreite nicht zu verwirklichen, weshalb Prismenlösungen ausscheiden. Bei einer Gitteranordnung benötigt man eine kurze Bandbreite, niedrige Furchendichte und große Gitterfläche, d.h. einen kleinen Spektrograph mit extrem hohem Öffnungsverhältnis. Damit ist auch automatisch ein Lichtleitwert erreicht, der mit konventionellen Geräten konkurrieren kann. Die vorgenannten Anforderungen an das Gitter 5 werden von holographisch erzeugten Konkavgittern erfüllt.

Eine dem Aufbau des Simultanspektrometers 1 angepaßte Beleuchtungseinrichtung 6 ist in Fig. 1 dargestellt. Damit das Spektrometer 1 mit größtmöglichem Wirkungsgrad ausgenutzt werden kann, ist grundsätzlich die gleiche Anordnung wie im Spektrometer gewählt, wobei an die Stelle des hochgeöffneten Hologrammgitters 5 ein asphärischer (Ellipsoid-)Spiegel 7 gleicher Öffnung tritt. Damit eine "vollständige Abbildung" erreicht wird, also die streng konjugierte Folge von Quellenblende-Objektivblende usw., erhält der Spiegel 7 die Dimension des Gitters 5. Von der Lichtquelle L und dem Bild der Lichtquelle L', das zugleich Eintrittsblende in das Meßgerät ist, wird verlangt, daß diese sehr klein sind. Dafür wird von der Lichtquelle L eine möglichst hohe Leuchtdichte gefordert. Diese Bedingung erfüllen beispielsweise Xenonlampen der niedrigsten Leistungsklasse von 30 bis 40 Watt bei einem Leuchtfelddurchmesser von 0,3 bis 0,5 mm. Für das Ultraviolett-Gebiet sind Deuteriumlampen mit Leuchtfelddurchmessern von 0,5 mm mit hoher Leuchtdichte und 35 Watt Leistungsaufnahme erhältlich.

Zwischen der Blende 4 mit dem Lichtquellenbild L' und dem Eintrittsspalt 3 des Spektrometers 1 liegt der Objektraum 8, in dem eine gerichtete Beleuchtung eines Objekts bzw. einer Probe 9, die in einer Küvette angeordnet ist, mit geringer Strahlenneigung gegen die optische Achse, im Idealfall telezentrische Beleuchtung, gefordert wird.

Zur Erreichung dieses Zieles wurden bisher vor der Probe 9 und hinter dieser je eine durch die Linsen 10, 11 repräsentierte Optik angebracht. Man erreicht damit aber keinen nennenswerten energetischen Wirkungsgrad, und es ist auch nicht möglich, am Eintrittsspalt 3 des Spektrometers 1 die erforderliche Apertur wiederherzustellen, die zum Erreichen der spektralen Auflösung (Rayleigh-Kriterium) nötig ist. Dies bedeutet, daß man in der Praxis die an sich gegebenen hervorragenden Möglichkeiten des Simultanspektrometers 1 nicht nutzen kann.

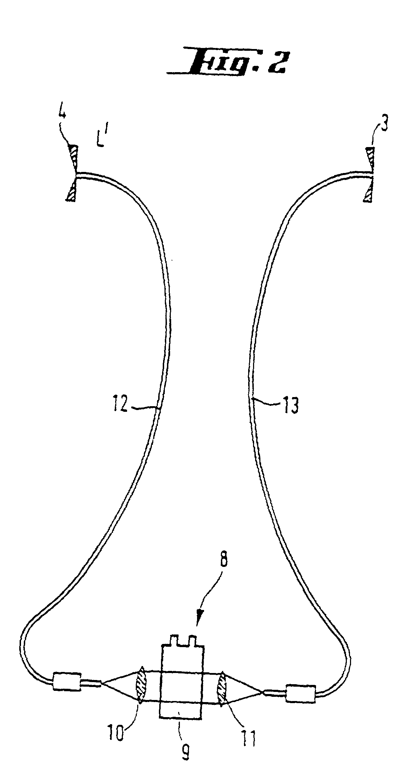

Man hat daher versucht, durch den Einsatz von Lichtleitern 12, 13 im Objektraum 8, wie in Fig. 2 gezeigt, das vorgenannte Problem zu lösen. Die Lichtleiter werden auch als Lichtwellenleiter bezeichnet.

Die Lichtleiter 12, 13 können starre oder flexible Monofasern oder Faserbündel sein. Lichtleiter können die hier interessierende Apertur $\alpha$ im UV-Bereich von 30° oder mehr und im Sichtbaren von bis zu 90° problemlos übertragen.

Führt man am Ort des Bildes L' der Lichtquelle das Licht in den Lichtleiter 12 ein, dann verläßt das Lichtbündel den Lichtleiter an seinem anderen Ende mit der gleichen Apertur und Intensitätsverteilung.

Eine gerichtete Beleuchtung der Probe 9 mit geringerer als der Eingangsapertur kann der Lichtleiter 12 jedoch nicht erbringen. Im optischen Sinn ist seine Austrittsöffnung zwar ein konjugierter Ort zur Eintrittsfläche, aber auch wenn am Eintritt ein echtes optisches Bild der Lichtquelle liegt, ist das am Austritt nicht der Fall, da jeder Querschnitt durch den Lichtleiter gleichwertig, aber nicht bildfähig ist. Die Austrittsfläche wirkt daher optisch als Loch. Erhalten bleibt jedoch die Lichtleitgeometrie, d.h. die Apertur. Weil das Lichtleiterende, wie gesagt, nicht abbildungsfähig ist, läßt sich auch mit nachgeschalteten Linsen- oder Spiegeloptiken keine definierte Abbildung schaffen. Man muß sich daher damit abfinden, daß das Problem der reversiblen Aperturwandlung in der Kombination von Lichtleitern mit konventioneller Linsenoder Spiegeloptik nicht zu lösen ist, auch wenn erfolglos verschiedene diesbezügliche Versuche unternommen wurden.

Es ist daher eine Aufgabe der vorliegenden Erfindung, ein spektroskopisches System zu schaffen, das eine gerichtete Beleuchtung der Probe bei einer optimalen Energieübertragung ermöglicht. Diese Aufgabe wird erfindungsgemäß dadurch gelöst, daß zur optischen Energieübertragung im Objektraum zwischen der Lichtquelle bzw. deren Bild und der Probe zwischen der Probe und dem Eintrittsspalt je ein Aperturwandler vorgesehen ist, der jeweils aus einem koaxialen kegelförmigen Lichtleiter oder Spiegel mit einer Lichteintritts- und einer Lichtaustrittsöffnung besteht, wobei die größere der Öffnungen jeweils der Probe zugekehrt ist und wobei die Probe in einer zwischen den Aperturwandlern längs der optischen Achse derart angeordneten Kapillarküvette aufgenommen ist, daß sie im wesentlichen in Längsrichtung durchstrahlt wird.

Hierbei sind die Lichteintrittsöffnung und die Lichtaustrittsöffnung des Aperturwandlers vorzugsweise senkrecht zur optischen Achse verlaufende Querschnittsöffnungen.

Das Spektrometer besitzt eine hohe Öffnung, aber extrem kleine Spalt- und Empfängerflächen. Der Probenraum braucht eine kleine Apertur bei kleiner Querschnittsfläche. Wegen der Reziprozität: kleine Fläche = große Apertur und große Fläche = kleine Apertur ergibt sich: wenn die Fläche des Spektrometerspalts deutlich kleiner ist als der Probenquerschnitt, kann man die Bedingung mit einem Aperturwandler erfüllen.

Das spektroskopische System ist mit Vorzug derart ausgebildet, daß die totalreflektierende Außenfläche jedes Kegels von jedem Aperturwandler von einem hermetisch abgeschlossenen Hohlraum umschlossen ist, dessen Wandungen vorzugsweise aus dem gleichen Material bestehen wie die Kegel selbst, wobei der Hohlraum zweckmäßigerweise von einem Fassungszylinder gebildet ist, in welchem der Kegel eingesetzt ist. Alle Lichtleiter, also auch die Aperturwandler, können nur divergente Büschel abstrahlen. Wenn man diesen Energieverlust in den Randzonen vermeiden will, z.B. weil dieses vagabundierende Licht stören kann, dann kann man an den Aperturwandler, vorzugsweise an dessen größerer Querschnittsöffnung, noch eine Korrekturlinse ansetzen. Weil an dieser Stelle die Apertur bereits reduziert ist, kann man hier mit einer Linse arbeiten. Auch diese Ausführungsform ist, wie die vorhergehende, vorzugsweise eine hermetisch abgeschlossene, monolithische Funktionseinheit.

Gemäß einer bevorzugten Variante der Erfindung ist der kleineren Querschnittsöffnung des Aperturwandlers zumindest ein Stück eines vorzugsweise zylindrischen Lichtleiters vorgeschaltet, dessen Querschnitt, vorzugsweise im Anlagebereich an den Aperturwandler, dessen kleinerer Querschnittsöffnung entspricht, zur Ankoppelung des Aperturwandlers an die Lichtquelle bzw. deren Bild oder den Eintrittsspalt des Spektrometers. Der Lichtleiter ist dabei vorzugsweise zumindest zwischen seinen Endbereichen als vorzugsweise flexibles Lichtleitkabel ausgebildet.

Die Erfindung beruht auf der Erkenntnis, däß in der Spektralanalytik nur energetisch-optische Fragestellungen zu lösen sind (Frequenz, Amplitude, Geschwindigkeit, Azimut und Achsenverhältnis der elektromagnetischen Strahlung), so daß alle Fragen nach der Bildlage, der Bildschärfe usw. zurückstehen können und daß man sich daher auf die Forderung beschränken kann, das Licht bzw. die Strahlung so verlustarm wie möglich durch den Objektraum zu führen sowie mit geeigneten Mitteln die Strahlneigungen, also die Aperturen, der Meßmethode anzupassen. Brechungs- und Beugungseffekte sind dispersionsbehaftet, also nicht achromatisch, und deshalb sind darauf beruhende Mittel auszuschließen. Als Mittel der Wahl verbleiben daher Reflexionsmittel, wobei man vorzugsweise von der Totalreflexion Gebrauch macht, die in den Lichtleitern ohnehin ausgenutzt wird.

Die erfindungsgemäße Lösung läßt sich auch als konsequente Reduzierung eines koaxialen Teleskops mit Innenwandreflexionen auf einen sehr kleinen trichterförmigen bzw. kegelartigen Aperturwandler verstehen. Der Aperturwandler kann in einfacher Weise an die bei vielen Ausführungsformen des spektroskopischen Systems ohnehin zweckmäßigerweise verwendeten Lichtleiter angekoppelt werden. Wie leicht zu ersehen ist, verändert die kegelartige Ausgestaltung des Aperturwandlers die Apertur des durchfallenden Lichts immer in dem Sinn, daß am kleinen Querschnitt die Apertur groß und am großen Querschnitt klein ist.

Gemäß einer weiteren Variante der Erfindung ist der größeren Querschnittsöffnung des Aperturwandlers ein Stück eines vorzugsweise zylindrischen Lichtleiters vorgeschaltet, dessen Querschnitt im Anlagebereich an den Aperturwandler dessen größeren Querschnittsöffnung entspricht, zur Ankoppelung des Aperturwandlers an die Probe, beispielsweise mittels Ankitten.

Für den Energietransport im Objektraum ist es besonders günstig, wenn das dem jeweiligen Ende des Aperturwandlers vorgeschaltete Ende eines zylindrischen Lichtleiters aus dem gleichen Material besteht wie der Aperturwandler. Gleiches gilt gegebenenfalls für eine an ein Aperturwandlerende angeschlossene Linse.

Der jeweilige Lichtleiter kann als Monofaser oder Lichtleitstab ausgebildet sein oder auch als optisches Faserbündel, wobei im zuletzt genannten Fall das an den Eintrittsspalt des Spektrometers angrenzende Faserbündel in diesem Endbereich in Form eines Spaltes ausgebildet sein kann, welcher einen separaten Eintrittsspalt des Spektrometers ersetzt. Als vorteilhaft hat es sich ferner erwiesen, wenn der halbe Kegelwinkel β des Aperturwandlers derart gewählt ist, daß bei der Objektbeleuchtung eine geringe Strahlenneigung gegenüber der optischen Achse erzielt ist.

Dabei ist mit Vorteil der halbe Kegelwinkel des Aperturwandlers kleiner oder gleich dem halben maximalen Lichtaustrittswinkel aus dem Lichtleiter, welcher von der Lichtquelle bzw. deren Bild zu dem zwischen Lichtquelle bzw. deren Bild und der Probe gelegenem Aperturwandler führt. Der Lichtaustrittswinkel dieses Lichtleiters ist, wie bereits vorstehend erwähnt, durch die Apertur des Beleuchtungssystems bestimmt, da im Lichtleiter die Lichtleitgeometrie, d. h. die Apertur, erhalten bleibt.

Falls das System für die UV-Spektroskopie vorgesehen ist, dienen als Aperturwandler Quarztrichter, wobei die diesen gegebenenfalls vorgeschalteten Lichtleiter, die den Hohlraum zur Aufnahme des Aperturwandlers bildende Hülle und gegebenenfalls eine an den Aperturwandler angeschlossene Linse vorzugsweise ebenfalls aus Quarz bestehen. Bei dieser bevorzugten derartigen Anordnung und einer Apertur der Beleuchtung von $\alpha = 26°$ ist der halbe Kegelwinkel des Aperturwandlers $\beta \leq 6{,}5°$ und beträgt vorzugsweise $5{,}5°$.

Nach einer weiteren bevorzugten Ausführungsform des erfindungsgemäßen Systems dient als Beleuchtungsanordnung eine punktförmige oder quasi punktförmige Lichtquelle, die mittels eines asphärischen Spiegels, vorzugsweise eines Ellipsoid-Spiegels, auf die Eintrittsöffnung des zwischen Lichtquelle und Objekt angeordneten Aperturwandlers oder des diesem vorgeschalteten Lichtleiters abgebildet wird.

In dem erfindungsgemäßen System wird als Spektrometer vorzugsweise eine aus einem Beugungsgitter und einer Empfängereinheit bestehende Anordnung verwendet, wobei bevorzugt als Beugungsgitter ein holographisches Konkavgitter und als Empfänger eine Photodiodenzeile dienen.

Es ist besonders günstig, wenn der Spiegel der Beleuchtungseinrichtung und das Konkavgitter des Spektrometers die gleiche Apertur aufweisen und/oder wenn eine 1:1-Abbildung der Lichtquelle auf die Dioden der Photodiodenzeile erfolgt.

Gemäß einer bevorzugten Anwendung des erfindungsgemäßen Systems ist die im Objektraum angeordnete Meßküvette derart vorgesehen, daß an ihrem Ein- und Ausgang je ein Aperturwandler mit seiner größeren Querschnittsöffnung direkt oder gegebenenfalls auch anwendungsbedingt über Strahlenteiler oder Analysator- bzw. Polarisatoranordnungen angeschlossen ist.

Die zumindest eine Küvette ist mit Vorteil als Durchflußküvette ausgebildet.

In einer weiteren bevorzugten Anwendung des erfindungsgemäßen Systems dient als Objekt eine Fläche, deren spektrales Reflexionsvermögen gemessen wird. Hierbei kann die Fläche im wesentlichen senkrecht beleuchtet werden, z.B. für optische Spannungsmessungen, oder die Fläche wird in einem Winkel beleuchtet. Im letzten Falle können Einfalls- und Reflexionswinkel gleich gewählt sein oder Einfalls- und Ausfallswinkel sind voneinander verschieden nach Art eines Gonio-Spektralphotometers.

Gemäß einer weiteren, ebenfalls bevorzugten Anwendung des erfindungsgemäßen Systems ist im Objektraum eine Interferometeranordnung vorgesehen, die z.B. in Form einer Michelson-Anordnung, einer Jamin-Anordnung oder einer Mach-Zehnder-Anordnung ausgebildet ist. Zweckmäßigerweise sind dabei eine Meßküvette und eine Vergleichsküvette vorgesehen.

Eine Weiterbildung des erfindungsgemäßen Systems, bei dem eine Interferometeranordnung zur Anwendung kommt, erlaubt auch eine besonders elegante Messung der Dispersion von Substanzen. Die Messung der Lichtgeschwindigkeit in einer homogenen Materie, also der Brechungszahl, ist analytisch bis heute vernachlässigt worden zugunsten der Absorptionsmessung. Dabei ist die Absorption als Imaginärteil der - immer - komplexen Brechungszahl nicht grundsätzlich aussagekräftiger als der Realteil, die Fortpflanzungsgeschwindigkeit. Die Absorption als reine Energiegröße ist jedoch bislang meßtechnisch leichter zugänglich gewesen. Bei Substanzen mit Resonanzfrequenzen der chemischen Bindung außerhalb des gerade zugänglichen Spektralbereichs verschwindet indessen der Imaginärteil, während der Realteil erhalten bleibt. Das gilt z.B. für sehr viele Kohlenwasserstoffe, darunter alle Zucker und Alkohole.

Die direkte Messung der Brechungszahl ist zumeist eine Winkelmessung und in der Analytik durch die Tatsache beeinträchtigt, daß das analytisch uninteressante Lösungsmittel den Hauptanteil der resultierenden Brechungszahl ausmacht. Zur Vermeidung dieses Nachteils schlägt die Erfindung eine differential-interferometrische Messung der Dispersion über das ganze Spektrum vor, wobei die Dispersion aus der Differenz $n(\lambda) - n_0(\lambda)$ gewonnen wird, in der mit $n(\lambda)$ die Brechungszahl der Lösung und mit $n_0(\lambda)$ die Brechungszahl des Lösungsmittels bezeichnet ist. Diese Methode ist in der Empfindlichkeit der Bestimmung den reinen Dispersionsspektren überlegen, wobei nach diesseitiger Kenntnis brauchbare Dispersions-Spektrometer ohnehin nicht existieren.

Zur Lösung dieser Aufgabe ist in dem vorbeschriebenen, mit einer Interferometeranordnung versehenen System zumindest ein Strahlenteiler vorgesehen, um das von dem Eingangs-Aperturwandler zugeführte Meßlicht den Eingängen der Meßküvette und der Vergleichsküvette zuzuführen und um das am entgegengesetzten Ende der Küvetten reflektierte Licht nach abermaligem Durchgang derselben dem Ausgangs-Aperturwandler zuzuführen. Die in einem Lösungsmittel gelöste Substanz, deren Dispersion untersucht werden soll, ist dabei bevorzugt in die Meßküvette und das Lösungsmittel in die Vergleichsküvette eingegeben.

Durch Verwendung einer weißen Lichtquelle und wegen der gleichen Weglängen im optischen System für beide Strahlengänge erhält man auf diese Weise aus dem in dem Ausgangs-Aperturwandler gesammelten Licht Interferenzmuster in der Empfängerebene des Spektrometers, die repräsentativ für die Dispersion der gelösten Substanz sind. Die Interferenzmuster zeigen dabei eine periodische Folge von Aufhellungen und Abdunklungen in der Empfängerebene des Spektrometers, aus welcher über die Abweichung von der Linearität, d.h. aus der Änderung der entsprechenden Ortsfrequenz, z.B. über eine Fourier-Analyse die Brechzahl für die jeweilige Wellenlänge bzw. der wellenlängenabhängige Brechzahlverlauf über das ganze Spektrum und damit die Dispersion der Substanz bestimmbar ist. Der große Vorzug dieses Systems ist darin zu sehen, daß bei Verwendung eines Simultanspektrometers die gesamte Dispersion der zu untersuchenden Substanz mit einer Messung bestimmbar ist.

Gemäß einer weiteren, besonders bevorzugten Anwendung des erfindungsgemäßen Systems ist, in Richtung des Beleuchtungsstrahlengangs gesehen, vor der zu untersuchenden Probe eine Polarisierungseinrichtung und hinter der zu untersuchenden Probe eine Analysatoreinrichtung vorgesehen zur Durchführung einer Polarisations-Spektrometrie, wobei an die Analysatoreinrichtung über je einen Aperturwandler ein Spektrometer angeschlossen ist zur Bestimmung der Rotationsdispersion und des Absorptionsspektrums der Probe aus den von den Spektrometern erhaltenen Photoströmen.

Diese Verwendung des erfindungsgemäßen Systems als Spektralpolarimeter und Absorptionsspektrometer ist für die Anwendung besonders interessant, weil sie die Kombination zweier so grundverschiedenen Bestimmungen aus einer einzigen Messung, noch dazu als Spektralfunktion, ermöglicht. Diese meßtechnische Möglichkeit löst auch ein sehr dringendes chemisch-pharmazeutisches Problem, nämlich die direkte Reinheitskontrolle bei der Trennung von Enantiomeren.

Das erfindungsgemäße spektrometrische System liefert in einer weiteren bevorzugten Ausgestaltung eine Möglichkeit zur Messung des Circular-Dichroismus (CD).

Das System weist hierzu einen Strahlenteiler auf, der das vom Eingangs-Aperturwandler gelieferte Licht in zwei Strahlengänge aufspaltet, die gleichzeitig mit der Aufspaltung, beispielsweise mittels eines Glan-Prismas, oder anschließend senkrecht zueinander polarisiert werden. Das eine dieser senkrecht zueinander polarisierten Strahlenbündel wird anschließend durch einen linksdrehenden Circularpolarisator und das andere durch einen rechtsdrehenden Circularpolarisator geleitet, die auch als Phasenverzögerungsglieder bezeichnet werden können. Danach durchsetzen die Strahlenbündel zumindest eine Meßküvette, welche die zu untersuchende Substanz enthält. Die beiden aus der Meßküvette getrennt austretenden Strahlenbündel werden anschließend über je einen Aperturwandler je einem Spektrometer, vorzugsweise einem Simultanspektrometer, zugeleitet. Die Meßgröße ist, wie bei der vorbeschriebenen optischen Rotationsdispersion, die Differenz bzw. die Summe der Photoströme der beiden Spektrometer, wobei die Differenz den Circular-Dichroismus und die Summe das Absorptionsspektrum wiedergibt.

Soweit die vorstehend beschriebenen spektroskopischen Systeme zur Absorptionsspektroskopie verwendet werden, kommen dabei normalerweise Standard-Mikroküvetten, z.B. der HPLC, zur Anwendung. Einheitlich sind normalen Absorptionsmessungen auch die koaxiale Strahlführung, Schichtlängen im cm-Bereich und darunter bei Durchflußküvetten, Strahldurchmesser von maximal 1 mm und typische Küvettenvolumina von 5 bis 10 µl.

Es ist eine weitere Zielsetzung der vorliegenden Erfindung, das spektroskopische System auch auf extrem kleine Substanzmengen auszudehnen. Für photometrische (Amplituden-)Messungen sind gewisse Mindestschichtlängen notwendig. Für eine korrekte optische Strahlführung liegen die Mindestvolumina, wie vorstehend erwähnt, bei etwa 5 µl. Die erwünschte weitere Reduzierung der Probenmengen hat verschiedene, allerdings wenig brauchbare Geräteausführungen hervorgebracht. Gemeinsam ist zwangsläufig die Messung in einer Kapillare.

Die im folgenden beschriebene weitere Ausgestaltung der Erfindung zur Lösung dieses Problems beruht auf den folgenden Überlegungen.

Die quantitative photometrische Analyse von Flüssigkeiten beruht auf dem bekannten Bouguer-Lambert-Beer'schen Gesetz, das den Zusammenhang zwischen Konzentration-Extinktion und durchstrahlter Schichtlänge als Spektralfunktion erfaßt.

Als Voraussetzung für die Gültigkeit wird hier die ungehinderte, also reflexionsfreie Durchstrahlung der Flüssigkeit mit näherungsweise parallelem Licht angegeben. Daraus ergibt sich zwangsläufig ein begrenzter "Lichtleitwert" (nach DIN: "geometrischer Fluß"), der umso niedriger wird, je kleiner der Strahlquerschnitt und je größer die durchstrahlte Schichtlänge wird, was immer dann der Fall ist, wenn an kleinen Substanzmengen mit hoher Empfindlichkeit gemessen werden soll, also durchweg in der Mikroanalytik. Es hat nicht an Versuchen gefehlt, die Fehler durch unvermeidlich verbleibende Reflexionen an den Innenwänden der Küvetten durch sogenannte "Brechungszahlkompensation" zu reduzieren. Eine vollständige Beseitigung gelingt jedoch nicht, weil zwar die Dispersion des Küvettenmaterials bekannt sein mag, nicht jedoch die Dispersion des Probenmaterials. Man reduziert deshalb diese systembedingten Restfehler durch permanente Referenzmessungen, zumeist bezogen auf das jeweils verwendete Lösungsmittel mit der Unterstellung, daß sich Lösung und Lösungsmittel in Brechungszahl und Dispersion nicht wesentlich unterscheiden.

Die vorliegende Weiterbildung der Erfindung wurde ausgelöst durch Entwicklungen und Erfahrungen in der Spektralanalytik von kleinen Substanzmengen, wie sie z.B. in der Biochemie typisch sind. Die verfügbaren absoluten Substanzmengen sind in sehr vielen Fällen extrem klein, z.B. bei Drüsensekreten usw. Die physiologisch relevanten Konzentrationen sind ebenfalls meist sehr niedrig, so daß es häufig problematisch, wenn nicht sogar unmöglich ist, die für einen signifikanten photometrischen Effekt nötige Schichtlänge zu realisieren, weil sich, wie erwähnt, verschwindend enge Küvettenquerschnitte nicht mit der notwendigen Leistungsdichte reflexfrei auf größere Längen durchstrahlen lassen.

In der überwiegenden Mehrzahl der Anwendungsfälle sind Durchflußküvetten erforderlich, die im Idealfall ohne Querschnittsänderung laminar durchströmt werden sollten, wobei Fließrichtung und Strahlengang bei gestreckten Küvetten zusammenfallen. Bei konventionellen Küvetten ist der Strahlbüschelquerschnitt kleiner als der Strömungsquerschnitt, eine Voraussetzung für die reflexionsfreie, d.h. fehlerlose Durchstrahlung. Diese systembedingte, unvollständige Volumenausnutzung macht die Zufluß- und Abflußkanäle konstruktiv einfach. Bei der erfindungsgemäßen Lösung ist dagegen der optische Strahlbüschelquerschnitt durchwegs größer als der Strömungsquerschnitt der Probe mit der zwangsläufigen Folge, daß die Zu- und Abflußkanäle irgendwo in den Strahlengang einschneiden müssen, wenn eine koaxiale Lichteinstrahlung in den "Küvetten-Lichtleiter" angestrebt wird.

Gemäß einer bevorzugten Ausführungsform des Systems ist auf die beiden Enden des Küvettenrohres ein ringförmiges Aufsatzstück aufgebracht, das eine Ein- bzw. Auslaßöffnung enthält, welche in eine Ein- bzw. Auslaßbohrung des Küvettenrohres mündet, wobei zwischen dem Aufsatzstück und der Außenfläche des Küvettenrohres eine Metallschicht aufgebracht ist. Diese Ausführungsform eignet sich besonders für eine axiale An- und/oder Auskopplung der Strahlung an die Küvette.

Besonders bevorzugt ist jedoch eine Schrägan- und/oder - auskopplung der Strahlung an der Küvette.

Die An- und/oder Auskopplung der Strahlung erfolgt zweckmäßigerweise mittels eines Kegelkörpers, der vorzugsweise aus dem gleichen Material besteht wie das Küvettenrohr, der auf seinem Kegelmantel eine Nut aufweist, wobei im Idealfall deren Krümmungsradius dem Außenradius des Küvettenrohres entspricht und wobei das Küvettenrohr unter Zwischenschaltung eines absorptionsfreien Mittels in der Nut derart gehaltert ist, daß im Falle der Strahlungsankopplung die Spitze des Kegelkörpers in Richtung des Strahlungsdurchgangs und im Falle der Strahlungsauskopplung die Spitze des Kegelkörpers entgegen der Richtung des Strahlungsdurchgangs weist. Der Kegelkörper ist vorzugsweise kreiszylindrisch ausgebildet, wobei der Winkel, den die Kegellängsachse mit dem Kegelmantel einschließt, vorzugsweise kleiner oder gleich einem Viertel des maximalen Aperturwinkels des Stufen-Wellenleiters ist. Bei einem Kegelkörper und einem Küvettenrohr aus Quarz beträgt der Winkel, den die Kegellängsachse mit dem Kegelmantel einschließt, etwa 15° bis 22,5°, vorzugsweise etwa 20° bis 22,5°, für eine optimale Energieübertragung.

Bei der Kleinheit der Verhältnisse ist es nicht unbedingt notwendig, eine genau passende Zylindernut einzuschleifen, weil eine einfache 90°-Winkelnut mit einem Immersionsmittel in den meisten Fällen auch ausreicht.

Wenn man prismatische Kapillaren einsetzt, wie sie in der Thermometrie üblich sind, dann genügt an dem Kegel eine angeschliffene Planfläche, was die Herstellung bedeutend erleichtert.

Aus Gründen der Handhabbarkeit hat es sich ferner als günstig erwiesen, wenn der Anschluß des Küvettensystems an eine Lichtquelle und/oder an eine Meßeinrichtung mittels eines der bereits vorstehend ausführlich beschriebenen Aperturwandler erfolgt, der jeweils einen koaxialen, kegelförmigen Lichtleiter oder Spiegel mit einer Lichteintritts- und einer Lichtaustrittsöffnung enthält, wobei die größere der Öffnungen jeweils dem Küvettenrohr zugekehrt ist. Der Aperturwandler besteht vorzugsweise aus dem gleichen Material wie das Küvettenrohr und gegebenenfalls der zur Ein- und/oder Auskopplung verwendete Kegelkörper, wobei die Lichteintrittsöffnung und die Lichtaustrittsöffnung des Aperturwandlers bevorzugt senkrecht zur optischen Achse verlaufende Querschnittsöffnungen sind. Der Aperturwandler wird zweckmäßigerweise derart eingesetzt, daß der jeweils kleineren Querschnittsöffnung des Aperturwandlers zumindest ein Stück eines vorzugsweise zylindrischen Lichtleiters vorgeschaltet ist, dessen Querschnitt im Anlagebereich an den Aperturwandler der kleineren Querschnittsöffnung entspricht, zur Ankopplung des Aperturwandlers an eine Lichtquelle oder Meßvorrichtung, wobei der Lichtleiter, zumindest zwischen seinen Endbereichen, in der Regel als vorzugsweise flexibles Lichtleitkabel ausgebildet ist. Die zumindest eine Lichtleitfaser des Lichtleiters besteht zweckmäßigerweise aus dem gleichen Material wie das Küvettenrohr und gegebenenfalls der Kegelkörper und/oder der Aperturwandler. Man erhält eine gute Ankopplung der Strahlung an das Küvettensystem, wenn die Austrittsapertur des Kegelkörpers größer ist als die Eintrittsapertur des Aperturwandlers, da hierdurch sichergestellt ist, daß die Strahlung in das Küvettenrohr mit einem für die Totalreflexion ausreichenden Neigungswinkel eintritt.

Bei Verwendung von Quarz als Küvettenrohr, Kegel und Aperturwandler sowie gegebenenfalls als Lichtleiter beträgt zweckmäßigerweise der Winkel, den der Kegelmantel des Aperturwandlers zu seiner Mittelachse einschließt, etwa 13° und der Winkel, den der Kegelmantel des Kegels zu seiner Mittelachse einschließt, etwa 20° bis 22,5°. Gemäß einer bevorzugten Variante der Erfindung sind der Kegelkörper und der zugehörige Aperturwandler als vorzugsweise einstückiger Doppelkegel ausgebildet.

In der Frage des Strahlungsübergangs von Beleuchtungs- oder Transport-Lichtleitern auf Kapillar-(Küvetten-)Lichtleiter gleicher zulässiger Apertur, erscheint die Anwendung von Aperturwandlern mit Doppelkegeln vom Prinzip her zunächst überflüssig, da der Strahlengang auf reduzierte Apertur aufgeweitet und anschließend wieder zurückgenommen wird. Die Verwendung der Doppelkegel ist jedoch aus technischer Sicht sehr nützlich, da beide Lichtleiter, der zur Beleuchtung dienende und die Kapillare, in der Mikroanalyse Durchmesser von nur wenigen Zehntel-Millimetern aufweisen. Es ist technisch sehr aufwendig, in das Ende des Beleuchtungs-Lichtleiters die Nut einzuarbeiten, die den Übergang zur Kapillare schaffen soll. Bei Verwendung der Doppelkegel läßt sich dies technisch besser beherrschen. Noch deutlicher wird dieser Vorteil bei dem Übergang von einem Beleuchtungs-Lichtleiter mit niedriger Apertur, wie z. B. 26°, auf eine nicht ummantelte Quarz-Kapillare mit 44°-Apertur, wo man an die Faser mit einem Durchmesser von 0,6 mm noch einen Verjüngungskegel anschleifen und polieren und dazu noch mit einer Nut versehen müßte.

Derartige Übergänge sind jedoch, wie aus den vorstehenden Ausführungen bekannt ist, bei hochgeöffneten Spektrometern, vorzugsweise Simultanspektrometern, notwendig, wo durch eine Kombination von Quarz-Lichtleitern mit entsprechenden Aperturwandlern eine optische Energieausnutzung möglich ist, die der theoretisch möglichen Grenze nahe kommt. Die dabei eingesetzten Lichtleiter haben einen Kern aus synthetischem geschmolzenem Quarz, der von einem dünnen Mantel umschlossen ist, dessen Brechungszahl bzw. Dispersion kleiner sein muß als bei Quarz. Da Quarz schon im unteren Bereich der Brechungszahlen und Dispersionen liegt (nur einige Fluoride liegen noch darunter), kommen nur ganz wenige Mantelmaterialien in Frage. Zur Zeit üblich sind ein spezieller Kunststoff, der aber chemisch und thermisch empfindlich ist, sowie die Dotierung der Quarzaußenwand mit vorwiegend Fluor in einem komplizierten Verfahren. Diese dotierten Quarzfasern verfügen über nutzbare Aperturwinkel von rund 26°, d.h. die zulässige Strahlneigung gegen die Achse beträgt rund 13°. Die Werte für die mit Kunststoff ummantelten Quarzfasern liegen nur geringfügig höher.

Da nicht ummantelte Quarzfasern, die also als angrenzende Schicht ein Gas, insbesondere Luft, haben, einen Aperturwinkel von knapp 90° zulassen, also eine Strahlneigung gegen die Achse von knapp 45°, müssen die Doppelkegel derart gestaltet sein, daß eine optimale Lichtübertragung erfolgt. Dies bedeutet, daß die dem Lichtleiter zugekehrte Verjüngung des Doppelkegels dessen maximaler Apertur von 26° angepaßt ist, was einem Kegelwinkel zur Symmetrieachse von etwa 13° entspricht, während die der Kapillare zugekehrte Verjüngung des Doppelkegels dessen maximaler Apertur von knapp 45° angepaßt sein muß, was bei der vorzugsweise verwendeten schrägen Einkopplung mittels der Nut in der Außenfläche des entsprechenden Kegels einem Kegelwinkel zur Symmetrieachse von maximal 22,5° entspricht. Hierdurch wird sicher vermieden, daß die Küvettenwandung zu einem selbständigen Lichtleiter mit nur reduziertem Strahlungsübergang zum Küvetteninhalt wird, was sich bei einer Ankopplung mit gleich niedriger Apertur, wie sie im Beleuchtungs-Lichtleiter herrscht, ergeben würde.

Als zweckmäßig hat es sich ferner erwiesen, wenn zwischen Aperturwandler und Kegelkörper ein zylindrisches Teil vorgesehen ist, welches die Austrittsfläche des Aperturwandlers an die Eintrittsfläche des Kegelkörpers ankoppelt und das vorzugsweise aus dem gleichen Material besteht wie der Kegelkörper und der Aperturwandler.

Die Doppelkegel werden gemäß einer bevorzugten Ausgestaltung im zylindrischen Teil vorzugsweise über punktuelle Anlageflächen gehalten.

Gemäß einer weiteren, besonders bevorzugten Ausgestaltung der Erfindung sind zwei Kegelkörper derart beabstandet voneinander angeordnet, daß ihre Nuten miteinander fluchten und nach oben gekehrt sind und daß in den Nuten das Küvettenrohr liegt. Vorzugsweise ist dabei zumindest einer der Kegelkörper längs des Küvettenrohres verschiebbar gelagert zur Einstellung der optischen Weglänge und/oder des einer Absorptionsmessung zuzuführenden Längsstücks des Küvettenrohres. Diese Konstruktion gestaltet sich besonders praktisch, wenn zumindest einer der Doppelkegel oder wenn beide Doppelkegel verschiebbar gelagert sind.

Weil der Abstand zwischen den Koppelstellen frei gewählt werden kann, ist es problemlos möglich, das Meßgut in der Kapillare durch physikalische Größen zu beeinflussen, z.B. durch elektronische, magnetische oder hochfrequente Felder, durch UV-, Alpha-, Neutronen-, Röntgenbestrahlung usw. Hierzu wird das Mikro-Küvettensystem zweckmäßigerweise in einem entsprechenden Reaktionsraum angeordnet. Wegen der Lichtleiteranschlüsse zum eigentlichen Meßgerät sind dabei nur einfache Teile kontaminationsgefährdet. Im Falle der UV-Bestrahlung ergibt sich ganz zwanglos die Fluoreszenzmessung. Wenn man in diesem Fall den auskoppelnden Aperturwandler aus geeignetem Glas herstellt, ist die Anregungsstrahlung für die nachfolgende Fluoreszenzstrahlungsmessung automatisch abgeblockt. Was für die Fluoreszenz gesagt wurde, gilt in gleicher Weise auch für Raman-Strahlungsmessungen. Dabei sei nochmals ausdrücklich festgestellt, daß auch im Falle dieser energiearmen optischen Effekte die erfindungsgemäße Anordnung das geometrische Optimum der Energieübertragung liefert, weil der spektrometrisch ausnutzbare Raumwinkel, also die Meßapertur, von der Küvettenapertur voll ausgefüllt wird.

Mit der Erfindung wird des weiteren ein spektroskopisches System geschaffen, in welchem zumindest eine Probe mittels von einer Lichtquelle ausgehendem Licht beleuchtet und das von der Probe ausgehende Licht auf den Eintrittsspalt zumindest eines Spektrometers, insbesondere eines Simultanspektrometers, gebündelt wird, und das dadurch gekennzeichnet ist, daß im Objektraum zwischen der Lichtquelle bzw. deren Bild und dem Eintrittsspalt des Spektrometers eine Kapillarküvette enthalten ist.

Das spektroskopische System verwendet mit Vorteil als Beleuchtungsanordnung eine punktförmige oder quasi punktförmige Lichtquelle, die mittels eines asphärischen, vorzugsweise eines Ellipsoid-Spiegels, auf die Eintrittsöffnung eines zwischen Lichtquelle und Objekt angeordneten Aperturwandlers oder eines diesem vorgeschalteten Lichtleiters abgebildet ist. Zweckmäßigerweise wird als Spektrometer eine aus einem Beugungsgitter und einer Empfängereinheit bestehende Anordnung verwendet. Als Beugungsgitter dient mit Vorteil ein holographisches Konkavgitter und als Empfänger eine Photodiodenzelle. Es ist günstig, wenn der Spiegel der Beleuchtungseinrichtung und das Konkavgitter des Spektrometers die gleiche Apertur aufweisen.

Eine weitere Möglichkeit, die sich über die Erfindung eröffnet, besteht darin, daß aktivierte, vorzugsweise zum einmaligen Gebrauch vorgesehene Kapillarabschnitte verwendet werden, um Mikroküvetten zu bilden.

Des weiteren ist es vorteilhaft, das Mikro-Küvettensystem als Strahlungsquelle für eine Sekundärstrahlung zu verwenden, welche von einer vorzugsweise durch Schrägeinkopplung in die Küvette eingespeisten Primärstrahlung angeregt ist. Wenn als Sekundärstrahlung eine Fluoreszenzstrahlung entsteht, kann diese direkt von einem Photoempfänger gemessen werden. Wenn als Sekundärstrahlung eine Fluoreszenz- oder Raman-Strahlung entsteht, empfiehlt es sich unter Umständen, die Kapillarküvette als Eintrittsspalt eines Spektrometers, vorzugsweise eines Simultanspektrometers, zu verwenden oder diese im Eintrittsspalt anzuordnen bzw. auf diesen abzubilden.

Abschließend sei noch vermerkt, daß die Erfindung, die im Kern eine geometrisch-optische bzw. eine energetisch-optische Optimallösung darstellt, nicht nur auf Anwendungen mit hoher spektraler Auflösung in einem großen Spektralbereich begrenzt ist, sondern mit dem gleichen energetischen Gewinn im einfachen monochromatischen Betrieb einzusetzen ist.

Zusammenfassend ist festzustellen, daß mit der vorliegenden Erfindung ein spektroskopisches System geschaffen ist, das mit einem Minimum von apparativen Elementen alle in der Einleitung genannten physikalischen Größen der energetischen Optik quantitativ erfassen und auswerten kann, speziell zur Analyse von kleinen und kleinsten Substanzmengen, wie sie z.B. in der HPLC heute gefordert werden. Das Bestechende an dem System ist, daß es mit einem Minimum von Komponenten auskommt, energetisch optimiert und umfassend ist. Umfassend heißt, daß alle fünf optischen Größen

Frequenz (Wellenlänge)
Geschwindigkeit (Brechungszahl)
Amplitude (in Absorption und Emission)
Azimut der Polarisation (Rotationsdispersion)
Achsenverhältnis der Polarisation (Elliptizität)

direkt und im gesamten interessierenden Spektralbereich (sichtbar und ultraviolett) gemessen werden können.

Die beiliegenden Zeichnungen dienen der weiteren Erläuterung der Erfindung.

Fig. 1        zeigt in schematisierter Darstellung ein spektroskopisches System nach dem Stand der Technik, in welchem ein Simultanspektrometer Verwendung findet;

Fig. 2        zeigt eine Variante für den Objektraum des in Fig. 1 gezeigten Systems nach dem Stand der Technik;

Fig. 3        zeigt in schematisierter Darstellung eine erste Version eines erfindungsgemäßen spektroskopischen Systems in einer Anordnung zur Absorptionsmessung, bei dem ebenfalls ein Simultanspektrometer Verwendung findet;

Fig. 4a        zeigt im Längsschnitt eine erste Ausführungsform eines erfindungsgemäß verwendeten Aperturwandlers;

Fig. 4b        zeigt im Längsschnitt eine zweite Ausführungsform eines erfindungsgemäß verwendeten Aperturwandlers mit einem daran angeschlossenen Lichtleiter, der zum Anschluß des Aperturwandlers an eine Probenküvette dient;

Fig. 4c     zeigt eine Variante der in den Fig. 4a und 4b gezeigten Aperturwandler, bei welcher der totalreflektierende Kegel in einem hermetisch abgeschlossenen Hohlraum eingebaut ist;

Fig. 4d     zeigt eine Variante des in Fig. 4c dargestellten Aperturwandlers mit einer Korrekturlinse;

Fig. 5     zeigt in einer Schnittdarstellung einen Bereich des Objektraumes von einer weiteren Version des erfindungsgemäßen spektroskopischen Systems in einer Anordnung zur Absorptionsmessung, wobei in den Fig. 5a bis 5d die Wirkung zunehmend kleinerer Kegelwinkel bei den Aperturwandlern dargestellt ist;

Fig. 6     erläutert in schematisierter Darstellung die ringpupillenartige Wirkung des Aperturwandlers;

Fig. 7     zeigt in schematisierter Darstellung den Objektraum von einer weiteren Version des erfindungsgemäßen spektroskopischen Systems in einer Anordnung zur Reflexionsmessung mit gleichem Einfall- und Reflexionswinkel;

Fig. 8a     zeigt in schematisierter Darstellung den Objektraum von einer weiteren Version des erfindungsgemäßen spektroskopischen Systems in einer Anordnung als Interferenzrefraktometer zur Dispersions-Differenz-Messung, wobei für das Interferometer eine Michelson-Anordnung gewählt ist;

Fig. 8b     zeigt in schematisierter Darstellung unter Weglassung der Beleuchtungseinrichtung eine Version des erfindungsgemäßen spektroskopischen Systems in einer Anordnung zur differentialinterferometrischen Messung, mit der die Dispersion einer Substanz bestimmbar ist;

Fig. 9     zeigt im Längsschnitt einen Bereich des Objektraums von einer weiteren Ausführungsform des erfindungsgemäßen spektroskopischen Systems in einer Anordnung als Polarisations-Spektrometer;

Fig. 10     zeigt in schematisierter Darstellung unter Weglassung der Beleuchtungseinrichtung eine weitere Ausführungsform des erfindungsgemäßen spektroskopischen Systems in einer Anordnung zur Bestimmung des Circular-Dichroismus;

Fig. 11     zeigt eine Teilansicht von einem weiteren Ausführungsbeispiel eines Mikro-Küvettensystems als Durchflußküvette mit schräger Strahlungsankopplung;

Fig. 12a-c     zeigen einen Schnitt längs der Linie IV-IV des in Fig. 11 gezeigten Küvettensystems zur Verdeutlichung verschiedener Möglichkeiten für die schräge Strahlungseinkopplung;

Fig. 13     zeigt ein weiteres Ausführungsbeispiel des Mikro-Küvettensystems als Durchflußküvette, bei welchem mit Hilfe von erfindungsgemäßen Doppelkegeln eine An- und Auskopplung der Strahlung erfolgt;

Fig. 14     zeigt einen Längsschnitt durch den linken Teil der Anordnung von Fig. 15, wobei hier die speziellen, für eine optimale Übertragung mit Quarzelementen geeigneten Kegelwinkel angegeben sind;

Fig. 15     zeigt eine Darstellung entsprechend dem linken Teil von Fig. 15 mit zusätzlichen Halterungen für den Doppekkegel;

Fig. 16     zeigt einen Schnitt längs der Linie IIX-IIX von Fig. 17 zur Erläuterung der Konstruktion für die Halterung;

Fig. 17     zeigt eine der Fig. 15 entsprechende Darstellung , bei welcher die Doppelkegel längs des Küvettenrohres zur Einstellung der optischen Weglänge verschiebbar sind;

Fig. 18     zeigt ein erfindungsgemäßes spektroskopisches System, bei welchem ein Mikro-Küvettensystem Verwendung findet;

Fig. 19     zeigt die Anordnung eines Mikro- Küvettensystems in einem Reaktionsraum;

Fig. 20     zeigt einen Querschnitt durch Fig. 21 längs der Linie XXII-XXII;

Fig. 21     zeigt die Anordnung eines Mikro- Küvettensystems zur integralen Fluoreszenzmessung;

Fig. 22    zeigt ein Mikro-Küvettensystem als Strahlungsquelle im Eintrittsspalt eines Simultanspektrometers, insbesondere zur spektralen Messung der Fluoreszenz oder Raman-Strahlung.

Das erfindungsgemäße spektroskopische System wird im folgenden anhand eines Beispiels beschrieben, bei welchem der in Fig. 1 gezeigte und vorstehend beschriebene Grundaufbau verwendet ist, wobei gleiche Teile mit gleichen Bezugszeichen versehen sind. Der zwischen dem Spektrometer 1 und der Beleuchtungseinrichtung 6 gelegene Objektraum 8 enthält eine Probe 9, die in einer Durchflußküvette aufgenommen ist. Beiderseits der Probe 9 ist je ein Aperturwandler 14, 15 angebracht, der aus einem koaxialen kegelförmigen Lichtleiter oder Spiegel besteht, mit einer Lichteintritts- und einer Lichtaustrittsöffnung und einer spiegelnden bzw. totalreflektierenden Innenfläche. Der zwischen dem Bild L', der Lichtquelle L und der Probe 9 angeordnete Aperturwandler 14 ist mit seiner die Lichteintrittsöffnung bildenden kleineren Querschnittsöffnung bzw. -fläche in der Ebene des Bildes L' der Lichtquelle L angeordnet, während seine die Lichtaustrittsöffnung bildende größere Querschnittsöffnung bzw. -fläche gegebenenfalls über ein Stück 16 eines Lichtleiters an das Eintrittsfenster der die Probe 9 enthaltenden Küvette angekoppelt ist. Hierbei sind die Lichteintrittsöffnung und die Lichtaustrittsöffnung des Aperturwandlers vorzugsweise senkrecht zur optischen Achse verlaufende Querschnittsöffnungen. Der zwischen der Probe 9 und dem Eintrittsspalt 3 des Spektrometers 1 angeordnete Aperturwandler 15 entspricht hinsichtlich seines Aufbaus identisch dem Aperturwandler 14, wobei er, bezogen auf die Probe 9, spiegelsymmetrisch zu letzterem eingebaut ist, so daß seine von der kleineren Querschnittsöffnung bzw. -fläche gebildete Lichtaustrittsöffnung in die Ebene des Eintrittsspalts 3 zu liegen kommt, während sich seine von der größeren Querschnittsöffnung bzw. -fläche gebildete Lichteintrittsöffnung gegebenfalls über ein Stück 16 eines Lichtleiters an die Austrittsöffnung der die Probe 9 enthaltenden Küvette angekoppelt ist.

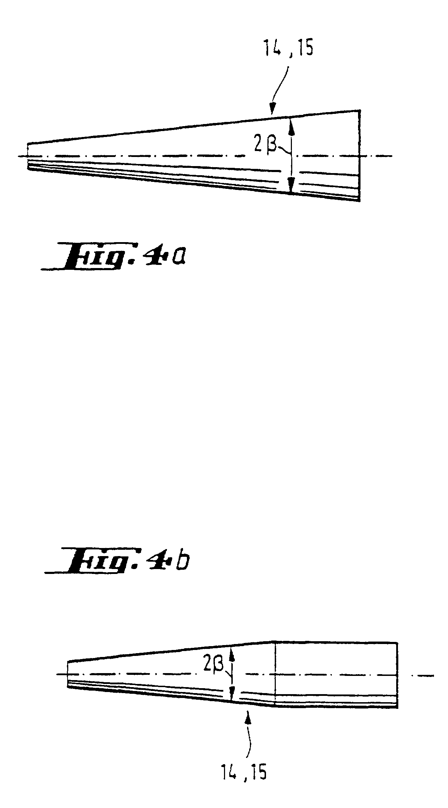

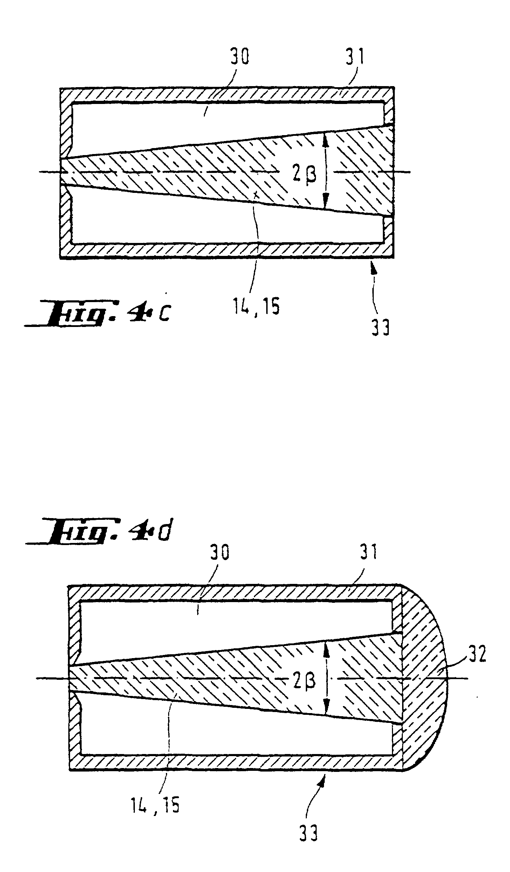

Die in Fig. 4a und Fig. 4b gezeigten speziellen Maße und Dimensionen der Aperturwandler 14, 15 betreffen ein spezielles, für die UV-Spektroskopie bevorzugtes Ausführungsbeispiel eines Quarz-Aperturwandlers, das im folgenden anhand der Fig. 5a bis 5d noch näher erläutert wird.

Weil ungeschützte optische Teile mit innerer Totalreflexion gegen Verschmutzung sehr empfindlich sind, wird, wie in Fig. 4c, d dargestellt, der totalreflektierende Kegel 14 oder 15 des Aperturwandlers in einem hermetisch abgeschlossenen, vorzugsweise zylindrischen Hohlraum 30 eingebracht, der von einer Wandung 31 begrenzt wird, die zweckmäßigerweise aus dem gleichen Material besteht wie der Kegel selbst. Die Wandung 31 gehört zu einem Fassungszylinder 33, in welchem der Kegel 14, 15 eingebaut ist.

Da alle Lichtleiter, also auch die Aperturwandler 14, 15, nur divergente Büschel abstrahlen können, ist es möglich, wie in Fig. 4d dargestellt, um den Energieverlust in den Randzonen zu vermeiden, z.B. weil dieses vagabundierende Licht stören kann, an den Aperturwandler noch eine Korrekturlinse 32 anzusetzen. Weil an dieser Stelle die Apertur bereits reduziert ist, kann man hier mit einer Linse arbeiten. Bei dieser wie bei der vorbeschriebenen Ausführungsform ist der Aperturwandler eine hermetisch abgeschlossene, monolithische Funktionseinheit.

Die in den Fig. 5a bis 5d gezeigten Beispiele beziehen sich auf eine besonders gut UV-durchlässige sogenannte Quarz-Quarz-Faser, welche am langwelligen Spektralende nur eine Apertur von 26° zuläßt. Diese High-Tech-Faser wird mit 0,6 mm Durchmesser als Monofaser gefertigt.

Bei einer Apertur von $2\alpha = 26°$ entspricht ein halber Kegelwinkel von $\beta = \alpha/2 = 6,5°$ gerade dem größten Nutzquerschnitt des Aperturwandlers. Nun ist aber in der Mikroanalytik, z.B. der HPLC, nicht der größte, sondern der kleinste mögliche Querschnitt gesucht und diesen erhält man durch Verkleinerung des halben Kegelwinkels $\beta$, allerdings um den Preis einer verkürzten Nutzlänge. Das Optimum ergibt sich aus der Geometrie des vorgegebenen Probenraumes, der meistens eine Durchflußküvette ist. Man erkennt, daß der Aperturwandler 14' von Fig. 5b mit einem halben Kegelwinkel $\beta = 5,5°$ ein Optimum erreicht.

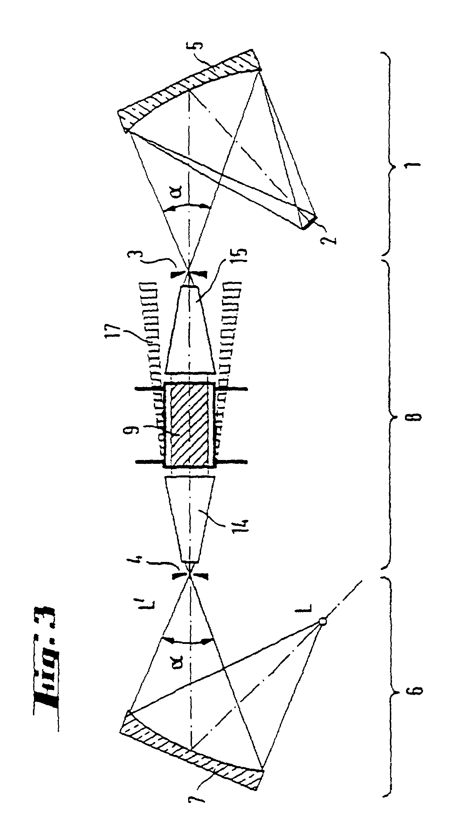

Bezüglich des energetischen Wirkungsgrades ist festzustellen, daß der Aperturwandler das einfachste Spiegelobjektiv ist. Er weist daher zwangsläufig eine Ringapertur bzw. Ringpupille auf mit einer optisch toten Zone, wie sie durch die Schraffur 17 in Fig. 3 dargestellt ist.

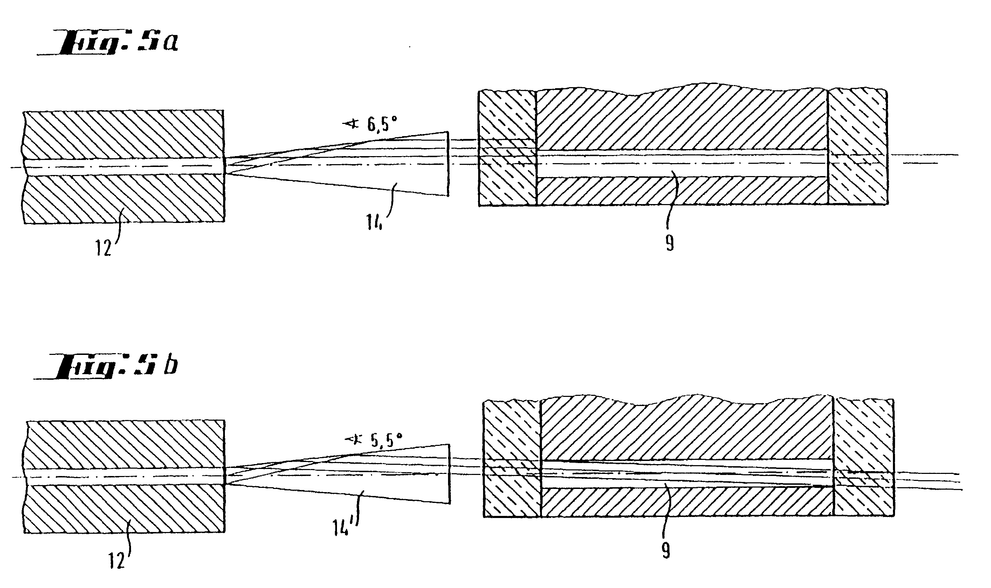

Bezogen auf das vorstehende Beispiel werden, wie aus Fig. 5 ersichtlich, alle Strahlen mit einer Neigung > 6,5° gegen die Achse bis zur Grenze von 13° reflektiert und durchsetzen die Probe. Im Kern des Strahlenbüschels gibt es eine kleine Zone, in der die Strahlen ohne Reflexion die Probe durchsetzen. Dazwischen ist eine Ringzone, die verlorengeht. Dieser Tatbestand ist auch in Fig. 6 schematisch dargestellt.

Die in Fig. 6 dicht schraffierte Verlustzone macht ohne Berücksichtigung der Kernzone etwa 25% des Querschnitts aus, d.h., der energetische Übertragungsgrad des Aperturwandlers beträgt zumindest 0,75. Man kann diesen Übertragungsgrad steigern, wenn man den halben Kegelwinkel $\beta$ verkleinert und eine zweite Reflexion hinzunimmt. Damit steigen allerdings auch die Herstellungsanforderungen.

Die Querschnittsverhältnisse Lichtleiteraustrittsfläche = Küvettenquerschnitt ergeben sich nach dem Strahlensatz.

Weil, wie vorstehend angeführt, in der wissenschaftlichen Analytik nie nach dem größt-, sondern nach dem kleinstmöglichen Küvettenvolumen gefragt ist, folgt, daß bei vollständiger Abbildung folgende Bedingung gelten muß:

Empfängerfläche = Spaltfläche = kleinere
Kegelöffnung des Aperturwandlers.

Die Empfängerfläche (z.B. Reticon S-Zeile) beträgt für maximale Auflösung 0,0625 mm$^2$ (25 µm Breite und 2,5 µm Höhe). Diese ergibt einen Durchmesser für die Kegelspitze des Aperturwandlers von 0,14 mm bzw. bei einer Faser von rund 0,15 mm Kerndurchmesser. Bei einer Apertur von ~ 26° aus dem vorstehenden Beispiel würde sich ein Küvetteninnendurchmesser von rund 0,4 bis 0,5 mm ergeben, was einem Querschnitt von 0,2 mm$^2$ entspricht. Dies bedeutet bei 10 mm Schichtlänge ein Füllvolumen der Küvette von gerade 2 µl.

Die "tote Zone" der Aperturwandler 14, 15 kann zu einer definierten Befestigung benutzt werden. Diese Fixierung kann an der Küvette und/oder am flexiblen Lichtleiter 12, 13 erfolgen. An der Küvette befestigt, kann die Kegelendfläche des Aperturwandlers direkt als Küvettenfenster benutzt werden. Nachteilig ist jedoch dabei, daß die Aperturwandler das Schicksal der Küvette teilen und bei deren Verschmutzung ausgetauscht werden müssen. In der Regel wird man daher die Aperturwandler 14, 15 an den Enden der Lichtleiter 12, 13 befestigen. Dabei kommen dann die Aperturwandler in einem gewissen Mindestabstand vor den Küvettenfenstern zu liegen. Zur Vermeidung von Interferenzen, wenn es auf maximale Energieausnutzung ankommt, kann der Abstand durch Immersion überbrückt werden.

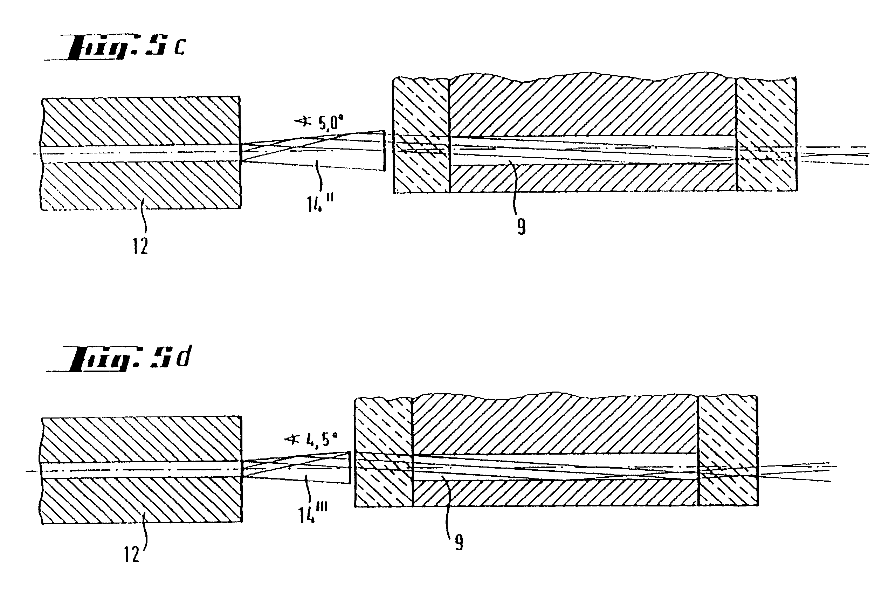

Die vorstehend anhand der Fig. 3 und 5 beschriebenen Ausführungsbeispiele betrafen den Einsatz des erfindungsgemäßen spektroskopischen Systems bei Absorptionsmessungen von in jeweils einer Küvette befindlichen Proben. In den Figuren 7 bis 9 sind weitere bevorzugte Varianten des erfindungsgemäßen spektroskopischen Systems schematisch dargestellt.

Fig. 7 betrifft die Verwendung des erfindungsgemäßen spektroskopischen Systems bei einer spektralen Reflexions- oder Emissionsmessung an der Oberfläche 18 einer Probe 19, wobei hier lediglich der Objektraum 8, nicht jedoch das Spektrometer 1 und die Beleuchtungseinrichtung 6 dargestellt sind. Während in Fig. 7 eine Reflexionsmessung mit gleichen Einfalls- und Reflexionswinkeln dargestellt ist, läßt sich die Anordnung auch zu einem Gonio-Spektralphotometer abwandeln, bei dem Einfalls- und Ausfallswinkel verschieden sind.

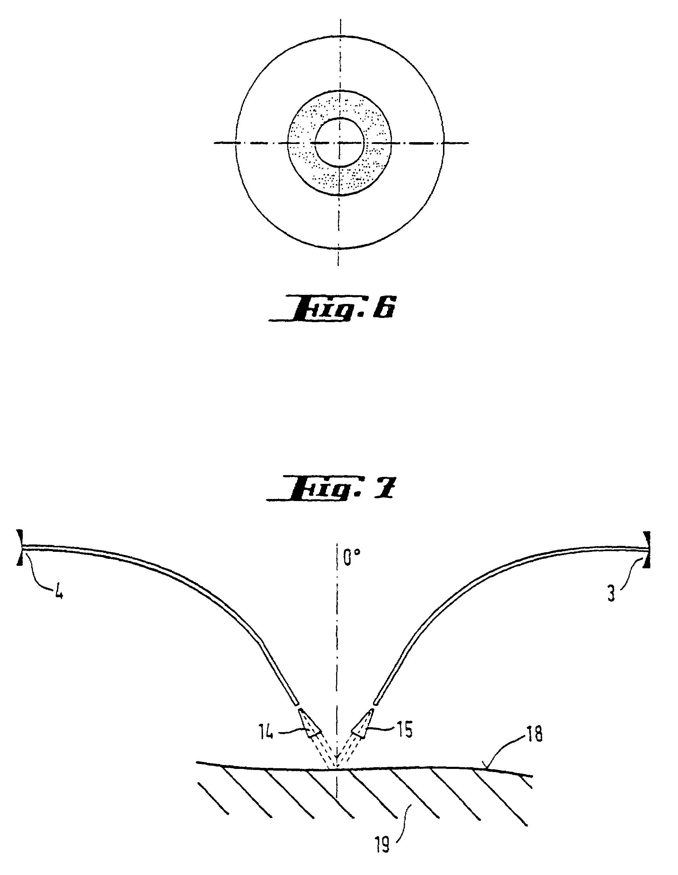

Fig. 8a zeigt die Verwendung des erfindungsgemäßen spektroskopischen Systems als Interferenzrefraktometer zur Dispersions-Differenz-Messung. Die Aperturwandler 14 und 15 sind hier an der Eingangsseite und der Ausgangsseite eines Strahlenteilers 20 angeordnet, der Licht von der Lichtquelle 6 über den Lichtleiter 12 und den Aperturwandler 14 erhält und zu einer Meßküvette 21 sowie zu einer Vergleichsküvette 22 leitet. Der Strahlenteiler 20 vereinigt die am Ende der Küvette 21, 22 reflektierte Strahlung nach deren abermaligen Durchlauf durch beide Küvetten 21, 22 und führt sie über den Aperturwandler 15 und den Lichtleiter 13 zum Eintrittsspalt 3 des Spektrometers 1. Anstelle der gezeigten Michelson-Anordnung können auch andere interferometrische Anordnungen, z.B. nach dem Jamin- oder dem Mach-Zehnder-Prinzip, verwendet werden.

Fig. 8b zeigt ein weiteres Beispiel für die Verwendung des erfindungsgemäßen spektroskopischen Systems als Interferenzrefraktometer. Das von der nicht dargestellten Lichtquelle kommende Strahlenbündel von vorzugsweise weißem Licht wird über den Eingangs-Aperturwandler 14 auf eine Seitenfläche eines Kösters'schen Prismas 48 gebündelt, in dem es von einer teildurchlässigen, vorzugsweise von einer Silberschicht gebildeten Fläche 49, welche das Prisma längs dessen Längssymmetrieebene durchsetzt, in zwei Strahlenbündel aufgespalten wird. Das eine der Strahlenbündel tritt dann in eine Meßküvette 21 und das andere in eine Vergleichsküvette 22 ein, die an ihren Enden, wie durch das Bezugszeichen 50 angedeutet, voll verspiegelt sind. Die reflektierten Strahlenbündel treten nach abermaligem Durchlauf der Meßküvette 21 bzw. der Vergleichsküvette 22 wieder in das Kösters'sche Prisma 48 ein, wo die Strahlenbündel zusammengeführt und über den Ausgangs-Aperturwandler 15 dem Spektrometer 1 zugeführt werden.

Die Meßgröße selbst wird, wie immer in der Interferometrie, gebildet aus dem Produkt von Weglänge und Brechnungszahl bzw. deren Differenzen. Weil die Weglänge in beiden Teilstrahlengängen gleich ist, ist das Ergebnis ein direktes Maß der Brechungszahldifferenzen.

Im folgenden ist ein praktisches Beispiel für die erreichbare Empfindlichkeit angegeben:

| | |
|---|---|
| Weglänge in der Probe | 20 mm = 2 x 10$^{-2}$ m (doppelter Durchgang) |
| Wellenlängengenauigkeit | 0,5 nm = 5 x 10$^{-10}$ m |
| Brechungszahlgenauigkeit | $n - n_0 = 1$ x 10$^{-8}$ |

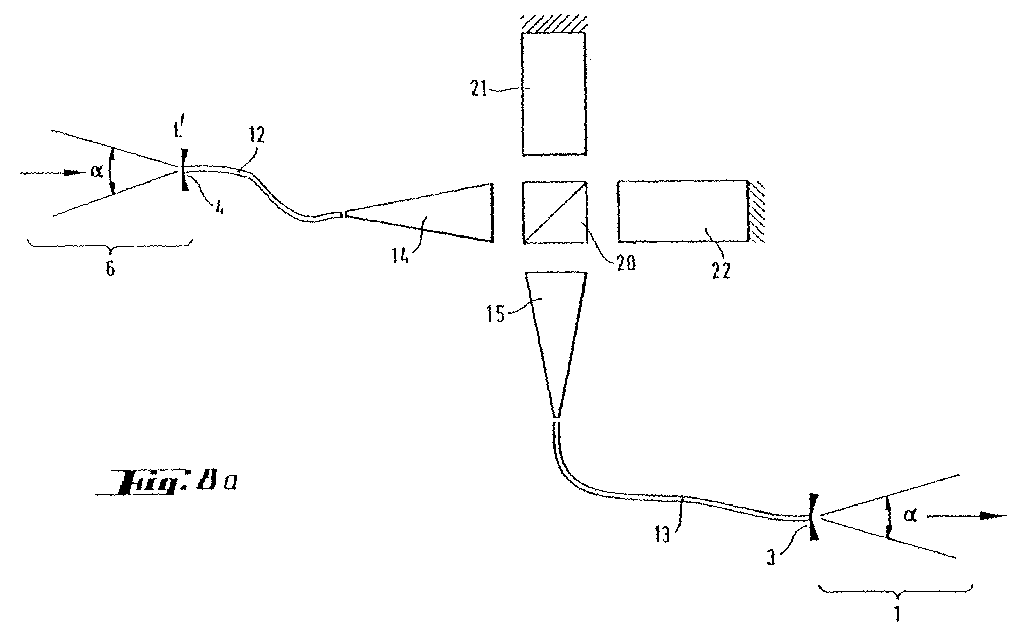

Fig. 9 zeigt eine Möglichkeit zum Einsatz des erfindungsgemäßen spektroskopischen Systems bei der Messung der Rotationsdispersion. Das System ist zu diesem Zweck als Polarisations-Spektrometer aufgebaut, von dem in Fig. 9 jedoch nur ein Teil des Objektraums 8 dargestellt ist. Das Spektrometer 1 mit seinem Eintrittsspalt 3 und die Beleuchtungseinrichtung 6 mit dem Bild L' der Lichtquelle L am Ort 4 entsprechen in ihrem Grundaufbau hierbei wiederum der in Fig. 3 dargestellten Ausführung. Vor der Küvette mit der Probe 9 ist ein Polarisator 23 angebracht und hinter derselben ein Analysator 24, welcher die beiden Vergleichsstrahlengänge zum einen über den Aperturwandler 15 und den Lichtleiter 13 zum Eintrittsspalt 3 des Spektrometers 1 leitet, zum anderen über einen weiteren Aperturwandler 25 und einen an diesen angeschlossenen weiteren Lichtleiter 26 zu dem Eintrittsspalt eines weiteren Spektrometers, das in der Fig. 9 jedoch nicht dargestellt ist, aber hinsichtlich seines Aufbaus dem Spektrometer 1 von Fig. 3 entspricht.

Die Erfindung ermöglicht mit dem in Fig. 9 skizzierten Aufbau eine wirkungsvolle und schnelle Messung der Rotationsdispersion, auch bei kleinen Probenmengen, die von größter biochemischer Bedeutung ist. Sie überwindet die bisherigen, überwiegend energetisch bedingten Schwierigkeiten in der Spektralpolarimetrie, wodurch schnelle Spektrenmessungen oder Mikromethoden praktisch ausgeschlossen waren, weil polarimetrische Strahlengänge noch stärker als andere aperturempfindlich sind.

Mit dem erfindungsgemäßen Aperturwandler wird die Möglichkeit erschlossen, ein Mikro-Spektralpolarimeter zu bauen, wie es in Fig. 9 dargestellt ist. Strahlengang und Küvette entsprechen den aus Fig. 5 schon bekannten Verhältnissen. Ein Polarisator 23, z.B. vom Glan-Typ, mit nur 3 mm Kantenlänge kann ohne technische Änderungen der Lasertechnik entnommen werden. Der Analysator 24, welcher gleichzeitig Strahlenteiler ist, steht mit seinen beiden Schwingungsrichtungen unter +45° bzw. -45° zur einfallenden Schwingungsrichtung. Die beiden Simultanspektrometer, welche über die Lichtleiter 13 und 26 mit den Aperturwandlern 15 und 25 an den Analysator 24 angekoppelt sind, liefern für jede Wellenlänge der Diodenzeile 2 der Spektrometer einen Photostrom $\Phi(x)_1$ bzw. $\Phi(x)_2$. Die gesuchte Rotationsdispersion, also der Drehverlauf der optischen Aktivität als Spektralfunktion ergibt sich zu:

$$\sin 2\alpha(x) = \frac{\Phi(x)_1 - \Phi(x)_2}{\Phi(x)_1 + \Phi(x)_2}$$

Man ersieht, daß wegen der Verhältnisbildung alle spektralen Apparatefunktionen eliminiert sind. Beachtenswert ist außerdem, daß der Mittelwert der Photoströme im Nenner der Gleichung exakt das Absorptionsspektrum der Substanz darstellt, welches leicht über die Software der im Rahmen dieser Anmeldung nicht näher diskutierten Auswerteinrichtung abgerufen werden kann.

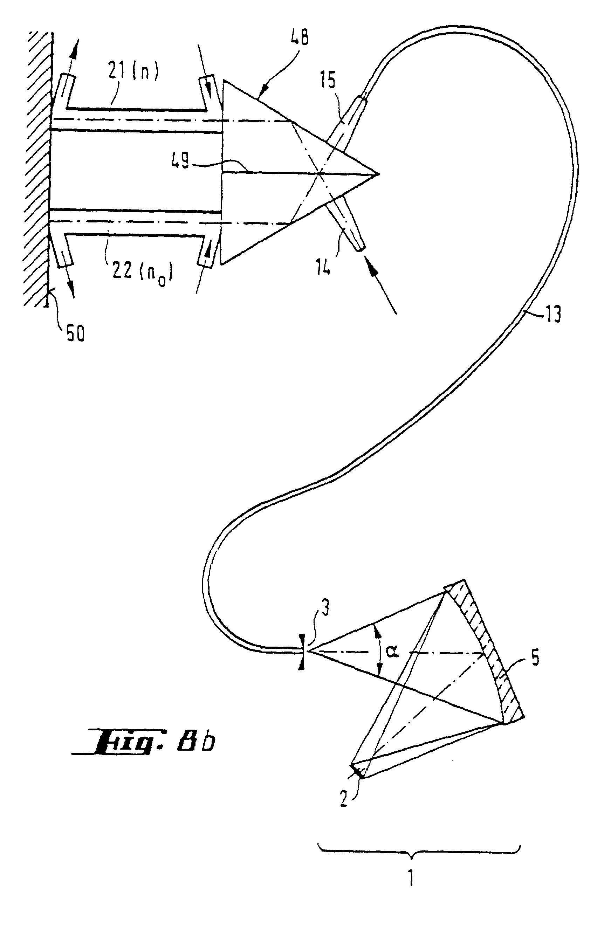

Fig. 10 zeigt eine weitere Möglichkeit zum Einsatz des erfindungsgemäßen spektroskopischen Systems in Form eines Geräts zur Messung des Circular-Dichroismus (CD). Darunter versteht man die Spektralfunktion der Differenz der Absorptionen für rechts- und linkscircular polarisiertes Licht. (Fünfte Größe der Feldgleichung: Achsenverhältnis des Polarisationszustandes). Der Circular-Dichroismus ist im mathematischen Sinne der Imaginärteil der optischen Rotationsdispersion. Er läßt sich als Absorptionsunterschied für rechts- und linkscircular polarisiertes Licht messen, und als Brechungszahlunterschied bei der optischen Rotationsdispersion. Circular-Dichroismus tritt nur bei anomaler Rotationsdispersion auf, ist aber strukturchemisch leichter zu deuten als die optische Rotationsdispersion (genau wie Absorption und Dispersion der linearen Brechungszahlen). Ein Nachteil der Circular-Dispersions-Spektroskopie liegt jedoch darin, daß man wegen der spektral begrenzten Wirkung der Circularpolarisatoren, d.h. der Phasenverschiebung, die Circular-Dispersions-Spektren nur abschnittsweise simultan messen kann. Trotzdem besteht in der Fachwelt der Wunsch nach einem derartigen Gerät.

Das in Fig. 10 schematisiert dargestellte Ausführungsbeispiel eines derartigen Geräts besteht aus einem Strahlenteiler, der das vom Eingangs-Aperturwandler 14 gelieferte Licht in zwei Strahlengänge aufspaltet, die aufgrund der Verwendung eines Glan-Prismas 52 als Strahlenteiler senkrecht zueinander polarisiert werden. Das eine dieser senkrecht zueinander polarisierten Strahlenbündel wird anschließend nach Reflexion an einem Spiegel 54 durch einen linksdrehenden Circularpolarisator $CP_L$ und das andere nach geradlinigem Durchtritt durch das Glan-Prisma 52 durch einen rechtsdrehenden Circularpolarisator $CP_R$ geleitet, welche Phasenverzögerungsglieder sind. Danach durchsetzen die Strahlenbündel eine Meßküvette 56, welche die zu untersuchende Substanz enthält. Die beiden aus der Meßküvette 56 getrennt austretenden Strahlenbündel werden anschließend über je einen Aperturwandler 15, 25 je einem Spektrometer 1, 1', vorzugsweise einem Simultanspektrometer, zugeleitet. Die Meßgröße ist, wie bei der vorbeschriebenen optischen Rotationsdispersion, die Differenz bzw. die Summe der Photoströme $Ph_R$ und $Ph_L$ der beiden Spektrometer 1, 1', wobei die Differenz den Circular-Dichroismus und die Summe das Absorptionsspektrum wiedergibt, gemäß folgenden Beziehungen:

$$\text{Circular-Dichroismus CD} = Ph_R - Ph_L$$

$$\text{Absorptionsspektrum} = Ph_R + Ph_L$$

Hierbei sind, wie aus Fig. 10 ersichtlich, mit $Ph_R$ und $Ph_L$ die beiden Photoströme bezeichnet. Das Glan-Prisma enthält einen Luftspalt, wenn UV-Messungen durchgeführt werden sollen.

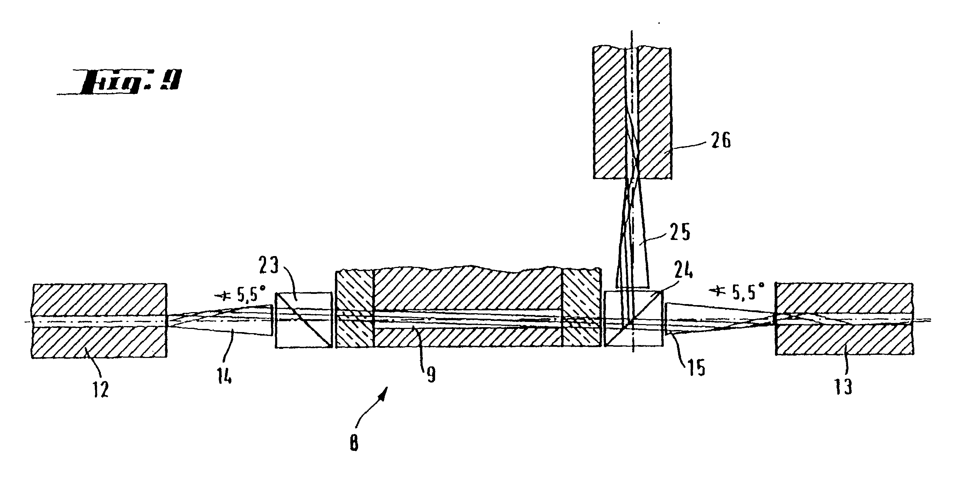

Im folgenden wird das Mikro-Küvettensystem der Erfindung und bevorzugte Verwendungen desselben anhand der Fig. 11 bis 24 näher erläutert.

Fig. 11 zeigt einen Stufenindex-Wellenleiter, der aus einem kreiszylindrischen Küvettenrohr 101 besteht, welches für den interessierenden Spektralbereich absorptionsfrei ist und in seinem Inneren eine Probenflüssigkeit 102 enthält. Das Küvettenrohr 101 dient als Mantel des Wellenleiters, dessen Kern die Probenflüssigkeit 102 bildet. Man bezieht auf diese Weise die Küvettenwandung in das Strahlenführungssystem ein, wie dies der Strahlenverlauf im Inneren der Küvette andeutet. Mit 103 ist die Eintrittsapertur, mit 104 die Austrittsapertur des Küvettensystems bezeichnet.

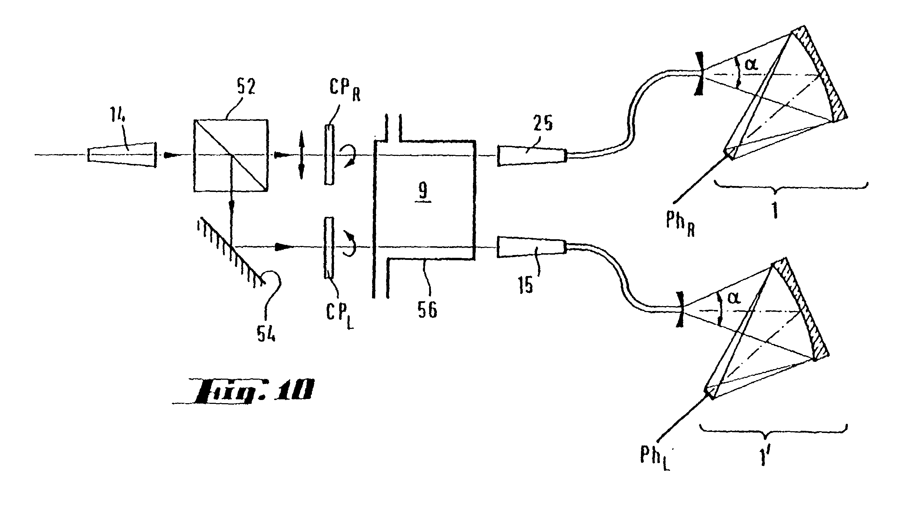

Fig. 12 zeigt eine mögliche Ausführungsform einer Durchflußküvette. Darin sind wieder 101 das Küvettenrohr als Mantel des Lichtleiters, 102 die Probenflüssigkeit, 103 und 104 Eintritts- und Austrittsapertur, sowie 105 die Küvettenabschlußfenster. Ringförmige Aufsatzstücke 106 enthalten Zufluß- 107 bzw. Abflußbohrungen 108 für die Probenströmung, die gemäß dem Pfeil $P_1$ in das Küvettenrohr 101 eintritt und gemäß dem Pfeil $P_2$ aus diesem austritt. Diese Aufsatzstücke 106 sind mit den Abschlußfenstern 105 und dem Küvettenrohr 101 verkittet und versteifen die Konstruktion. Auf dem kurzen, zylindrischen Abschnitt, in welchem das Aufsatzstück 106 auf der Außenfläche des Küvettenrohres aufsitzt, d.h. im Bereich der Kittfuge zwischen 101 und 106 ist der Küvettenaußenmantel, wie durch das Bezugzeichen 109 angedeutet, metallisch verspiegelt, um die Funktion der Lichtleitung auch in diesem Abschnitt nicht zu unterbrechen. Das Reflexionsvermögen dieser Metallschicht ist zwar um etwa 20% niedriger als die Totalreflexion, doch ist dieser Teilverlust auf die Gesamtfläche bezogen gering.

Wenn man auf eine koaxiale Lichteinstrahlung in das Küvettenrohr 101 der Lichtleiterküvette verzichtet, ergibt sich eine besonders einfache und überzeugende Lösung für den Durchfluß der Probenflüssigkeit 102, die dann an den Enden des Küvettenrohres 101 zu- bzw. abgeführt werden kann. Die Fig. 11 und 12a-c zeigen das Prinzip einer derartigen schrägen Einkopplung des Lichtes in das kreiszylindrische Küvettenrohr 101.

Hier ist ein Kegelkörper 110, der aus dem gleichen Material besteht wie das Küvettenrohr 101, also z.B. aus Quarz, entlang seines Kegelmantels mit einer teil- bzw. halbzylindrischen Nut 111 versehen, die den gleichen Radius aufweist wie der Außenmantel des Küvettenrohres 101 und in die sich das Küvettenrohr 101 exakt einfügt. Die kreiszylindrische Nut 111 kann über die gesamte Länge die gleiche Tiefe aufweisen, sie kann aber auch, von einem tangentialen Berührungspunkt ausgehend, zunehmend tiefer werden. Ein absorptionsfreies Immersionsmittel stellt den optischen Kontakt zwischen Kegelkörper 110 und Küvettenrohr 101 her. Der aufgesetzte Kegelkörper 110 wirkt als Aperturwandler und gestattet auf diese Weise eine optische Einkopplung mit dem bestmöglichen Wirkungsgrad durch Anpassung des Kegelwinkels, wobei, wie der Strahlengang in Fig. 11 andeutet, eine effektiv größere Apertur der Beleuchtung erreicht wird mit der Folge, daß die Probenflüssigkeit 102 öfters durchlaufen und damit die wirksame Schichtlänge vergrößert wird. Der grundsätzliche Aufbau und die Wirkung derartiger Aperturwandler sowie bevorzugte Anwendungen derselben sind vorstehend anhand der Fig. 1 bis 10 ausführlich erläutert.

Die Verwendung derartiger Aperturwandler beruht auf der Erkenntnis, daß in der Spektralanalytik nur energetisch-optische Fragestellungen zu lösen sind (Frequenz, Amplitude, Geschwindigkeit, Azimut und Achsenverhältnis der elektromagnetischen Strahlung), so daß alle Fragen nach der Bildlage, der Bildschärfe usw. zurückstehen können, und daß man sich daher auf die Forderung beschränken kann, das Licht bzw. die Strahlung so verlustarm wie möglich durch den Objektraum zu führen sowie mit geeigneten Mitteln die Strahlneigungen, als die Aperturen, der Meßmethode anzupassen. Da Brechnungs- und Beugungseffekte dispersionsbehaftet, also nicht achromatisch sind, sind darauf beruhende Mittel ungeeignet. Als Mittel der Wahl verbleiben daher Reflexionsmittel, wobei man vorzugsweise von der Totalreflexion Gebrauch macht.

Der kegelartige Aperturwandler, der zum Schutze der totalreflektierenden Außenfläche vor Verschmutzungen vorzugsweise mit einem hermetisch abgeschlossenen Hohlraum umhüllt ist, läßt sich auch als konsequente Reduzierung eines koaxialen Teleskops mit Innenwandreflexionen verstehen.

Der Aperturwandler kann in einfacher Weise an die bei vielen Ausführungsformen von photometrischen und spektroskopischen Systemen ohnehin zweckmäßigerweise verwendeten Lichtleiter angekoppelt werden. Wie leicht zu ersehen ist, verändert seine kegelartige Ausgestaltung die Apertur des durchfallenden Lichts immer in dem Sinn, daß am kleinen Querschnitt des Kegels die Apertur groß und am großen Querschnitt klein ist.

Der Aperturwandler ermöglicht es somit, daß man mit Lichtleitern verschiedener Aperturen beliebige photometrische Systeme in Absorption oder Emission aufbauen kann, deren Energieübertragungsgrad dem jeweils leistungsfähigsten optischen Spektrometersystem angepaßt ist.

Bei der in Fig. 11 gezeigten Variante des Küvettensystems kann das Ausflußende des Küvettenrohres 101 offen gelassen sein, so daß die Probenflüssigkeit dort frei abtropft, wenn eine integrale Absorptionsmessung durchgeführt wird, wobei in diesem Falle am Auslaßende lediglich eine Photomultiplieroder eine entsprechende Meßvorrichtung angeschlossen ist.

Aus den vorstehenden Ausführungen ist ferner bekannt, daß die Wirkung der Aperturwandlung durch die Kombination von zylindrischen und konischen Lichtleitern reversibel und in der Wirkung variierbar ist. Man kann daher am Ausflußende des Küvettenrohres einen weiteren Kegelkörper entsprechend befestigen, der die Austrittsapertur verkleinert und beispielsweise an die Eingangsapertur eines Meßsystems oder eines Lichtleiters, welcher das austretende Licht einem Meßsystem zuführt, anpaßt.

Diese Konstruktion ist in den Zeichnungen jedoch nicht näher dargestellt.

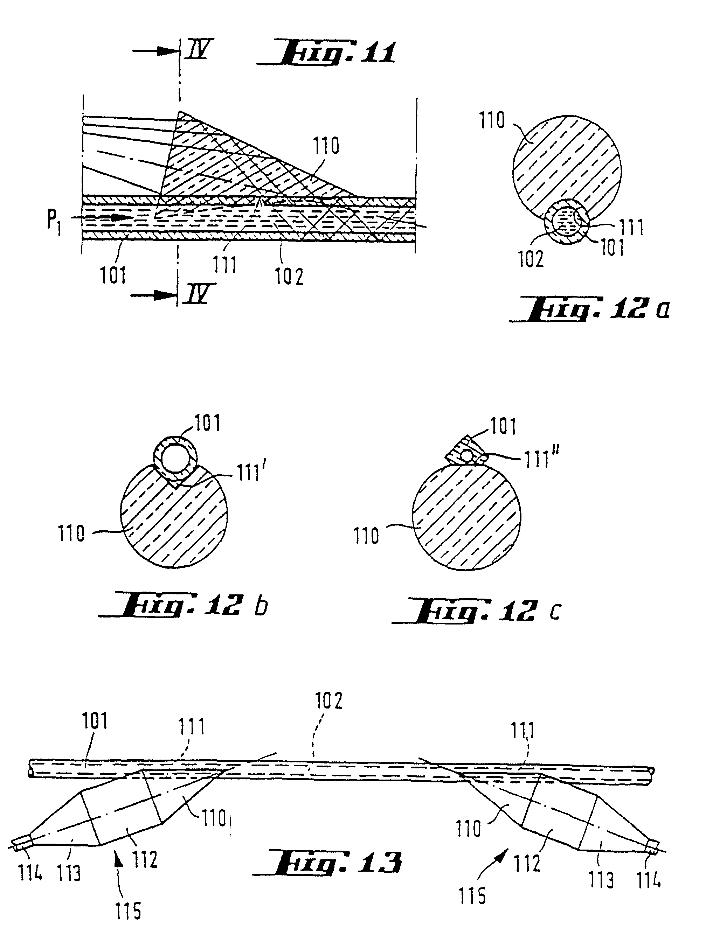

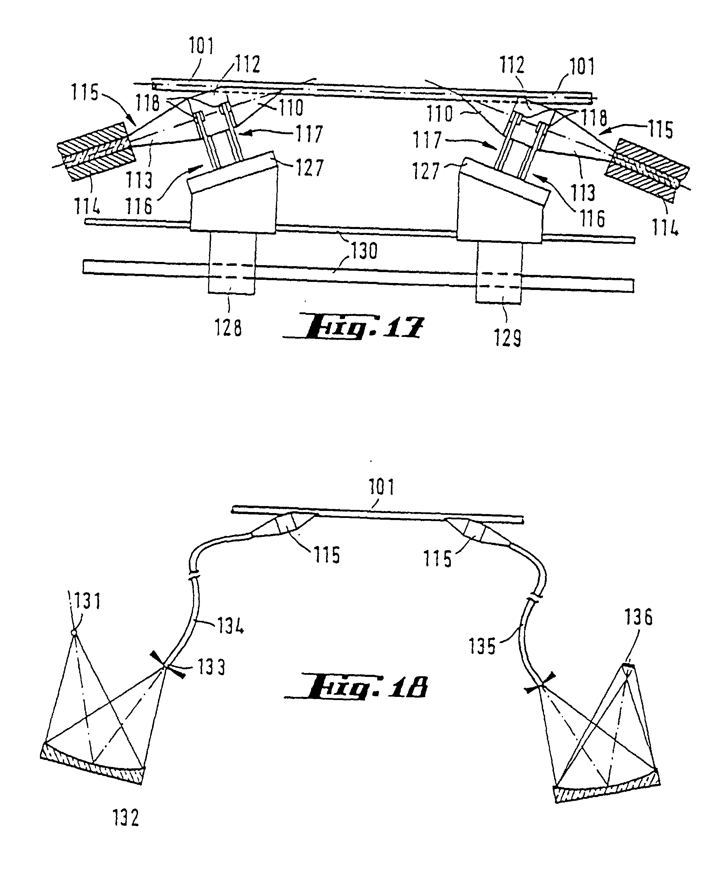

Wenn man die Möglichkeiten der Aperturwandler konsequent ausnützt, dann gelangt man zu der in Fig. 13 dargestellten Konstruktion. Das Küvettenrohr 101 mit der durch dasselbe geleiteten Probenflüssigkeit 102 liegt hier in den angepaßten Nuten 111 der Kegel 110 auf. Diese Kegel 110 gehen über kurze zylindrische Teile 112 in Gegenkegel 113 über, an deren Spitzen in der oben beschriebenen Weise Lichtleiter 114 angeschlossen sind. Die Funktionselemente 110, 112, 113 sind jeweils in einem Stück als Doppelkegel 115 gefertigt, wobei die mechanische Halterung im optisch unkritischen zylindrischen Teil 112 erfolgen kann, wie im folgenden anhand der Fig. 15 und 16 noch näher ausgeführt wird.

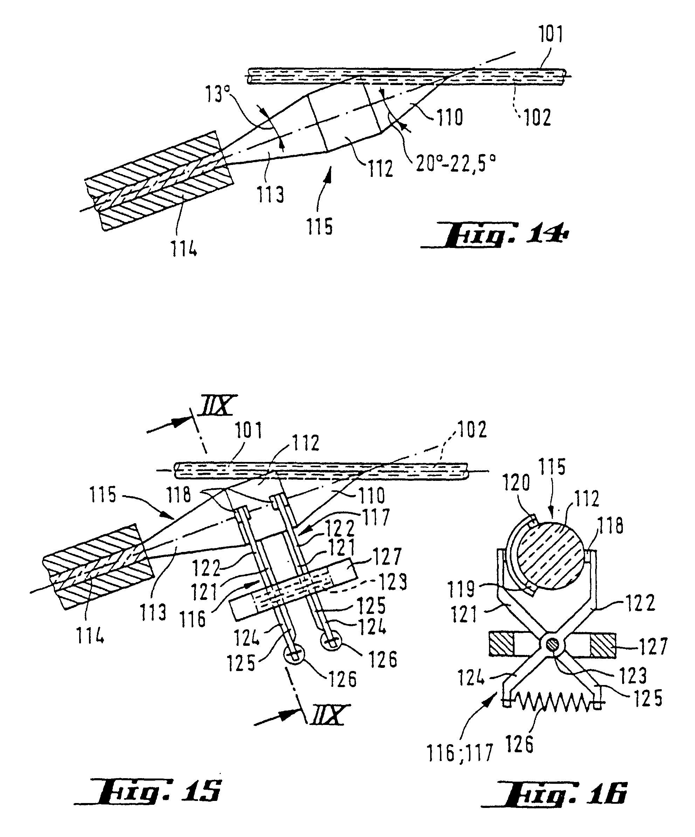

Fig. 14 zeigt ein konkretes Ausführungsbeispiel für die Ankopplung eines Quarz-Lichtleiters 114 an ein nicht ummanteltes Quarz-Küvettenrohr 101, da Quarz-Lichtleiter, wie erwähnt, für die Anwendungen der Spektroskopie im UV- und VIS-Spektralbereich besonders günstig sind. In Fig. 14 ist die Dimensionierung des aus Aperturwandler 113 und als Koppelglied wirkender Kegelkörper 110 kombinierten Doppelkegels 115 für eine praktische Anwendung in einem Spektralbereich von etwa 200 bis 1000 nm angegeben. Dieser Doppelkegel 115 mit zylindrischen Zwischenstück 112 stellt die Verbindung her zwischen dem dotierten Quarz-Lichtleiter 114 mit etwa 26° zulässiger Apertur und der "nackten" Quarzküvette 101 mit etwa 45° Apertur. Der Kegel 113 zum koaxialen Anschluß des Lichtleiters 114 hat den zulässigen gesamten Öffnungswinkel von 26°, also 13° Neigung des Kegelmantels gegen die Achse. Der küvettenseitige Kegel hat dagegen wegen der Asymmetrie der Einstrahlung einen gesamten Öffnungswinkel von 40° bis 45°, d.h. eine Neigung des Kegelmantels gegen die Achse von 20° bis 22,5°. Die exakten Werte werden durch die praktischen Anforderungen gegeben. Der zylindrische Teil 112 zwischen den beiden Kegeln erleichtert primär die Herstellung, er gestattet zugleich aber auch eine einfache und gut reproduzierbare Befestigung, wie sie in den Fig. 15 und 16 dargestellt ist.

Der über die Nut 111 das Küvettenrohr 101 von unten zur Hälfte umschließende Doppelkegel 115, der an seinem, dem Küvettenrohr 101 abgekehrten Ende an dem Lichtleiter 114 angekoppelt ist, wird im Bereich des zylindrischen Teils 112 von zwei Klammern 116, 117 getragen, von denen jede über je drei annähernd punktuell gestaltete Anlageflächen 118, 119, 120 um je 120° gegeneinander versetzt an der Außenseite des Doppelkegels 115 elastisch anliegt. Die Klammern 116, 117 sind zangenförmig ausgebildet, wobei die eine Zangenbacke zwei der Anlageflächen 119, 120 und die andere Zangenbacke die dritte Anlagefläche 118 trägt. Die, bezogen auf die Drehachse 123, den Zangenbacken 121, 122 abgekehrten Betätigungsarme 124, 125 der Klammern werden durch eine Feder 126 auseinandergepreßt, so daß durch Überwindung der Federkraft die Klammern gelöst werden können. Die Klammern 116, 117 können an einem gemeinsamen Halter 127 befestigt sein.

Fig. 17 zeigt eine besonders interessante Variante der Erfindung. Da, wie schon erwähnt, die jeweils photometrisch optimale Schichtlänge, bedingt durch Konzentration und Extinktionskoeffizient, von der jeweiligen Meßaufgabe abhängt und die Küvette wegen der Schrägeinkopplung eine Kapillare beliebiger Länge sein kann, läßt sich die wirksame Schichtlänge einfach dadurch variieren und einstellen, daß man die beiden Doppelkegel 115 mit den Klammern 116, 117 und dem Halter 127 auf je einem Schlitten 128, 129 befestigt, der auf einer Schlittenführung 130 linear und reproduzierbar verschoben werden kann, z.B. durch eine nicht dargestellte Mikrometerschraube oder -spindel. Die erfindungsgemäße Anordnung nach Fig. 17 eignet sich besonders für die Absorptionsspektroskopie an schwach absorbierenden Flüssigkeiten, weil die Schichtlänge beliebig verlängert werden kann. Als praktisches Beispiel sei genannt die direkte Nitratbestimmung in Wasser. Auch im Rahmen der HPLC (High Performance Liquid Chromatography) ermöglicht diese Anordnung völlig neue meßtechnische Dimensionen, wie dies bereits vorstehend erörtert wurde.

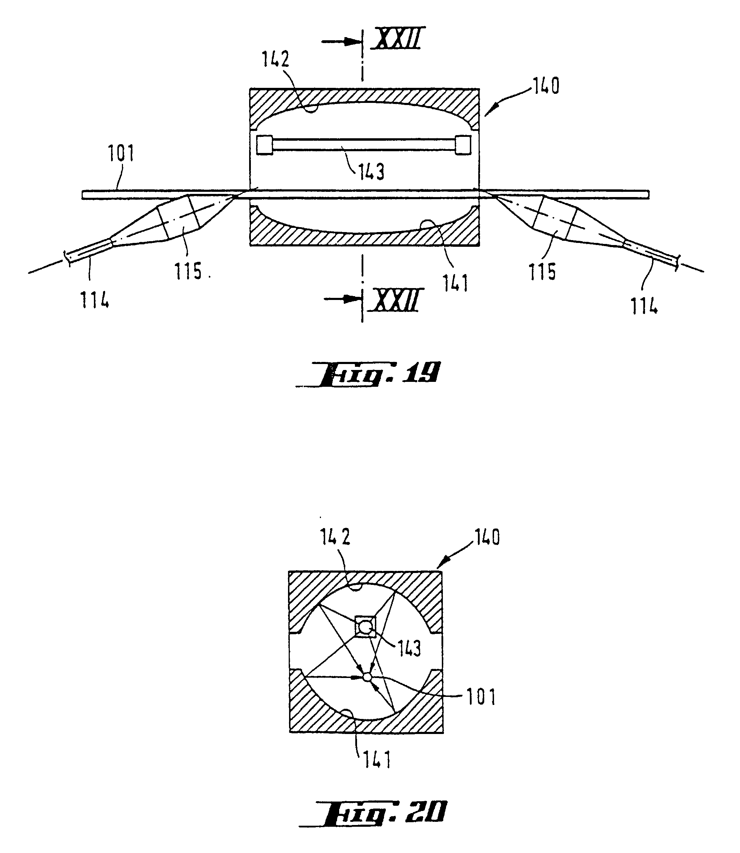

In Fig. 18 ist ein einfaches Anwendungsbeispiel des Mikro-Küvettensystems schematisch wiedergegeben. Eine Kontinuums-Lichtquelle 131 mit kleinem Leuchtfeld wird durch einen Ellipsoid-Spiegel 132 auf die Eintrittsfläche 133 eines Übertragungs-Lichtleiters 134 abgebildet. Dieser Lichtleiter 134 schließt an den erfindungsgemäßen Doppelkegel 115 als Aperturwandler und Koppler an und besorgt zugleich die Schrägeinkopplung der Strahlung in die Kapillarküvette 101. In einem durch die Meßaufgabe gegebenen Abstand folgt ein gleichartiger Doppelkegel 115 zur Auskopplung der Strahlung, die in streng analoger Weise über einen Lichtleiter 135 zum Spektrometer 136, als dem eigentlichen Meßteil der Anordnung, führt. Vorzugsweise ist die Apertur in Leuchte und Spektrometer gleich, mit dem derzeit höchsten erreichbaren Wert gewählt. Bezüglich der Einzelheiten der Leuchte und des Spektrometers, das z. B. ein Simultanspektrometer sein kann, wird ebenfalls auf die Fig. 1 bis 3 und den zugehörigen Text verwiesen.

In der Anwendung der Kapillar-Küvettensysteme ergeben sich für die Spektralphotometrie zwei Schwerpunkte. Erstens die Absorptionsspektrometrie im Nanoliterbereich der HPLC, ein, z.B. gemäß den anhand der Fig. 1 bis 5, 9 und 10 beschriebenen Ausführungsformen, einschließlich reaktionskinetischer Messungen im Submikrobereich, z.B.

Kapillarelektrophorese und strahlungsabhängige (phototrope) Effekte. Zweitens - und das erscheint von besonderer Wichtigkeit - die Möglichkeit zur optimalen, verlustfreien Messung von Sekundäremissionen, also Fluoreszenz- und Raman-Strahlung an unvorstellbar kleinen Mengen, wobei der Strömungsfaden selbst in die Funktion des Spektrometerspalts treten kann.

Auf weitere Einzelheiten dieser Einsatzmöglichkeiten wird im folgenden noch näher eingegangen.

Die Absorptionsspektroskopie an kleinsten Durchflußmengen (Mikro-HPLC) erlaubt die spektroskopische Überwachung von Reaktionsabläufen, speziell der Reaktionskinetik. Dabei wird der Reaktionsablauf in dem Kapillarabschnitt zwischen der Ein- und der Auskoppelstelle ermittelt, beispielsweise in Abhängigkeit von physikalischen und chemischen Beeinflussungen der Probe zwischen den An- und Auskopplungsstellen der Kapillarküvette. Als physikalische Einflüsse, die auf die Probe zwischen den Koppelstellen wirken, kommen beispielsweise folgende in Betracht: optische Bestrahlung mit ausgewählten Eigenschaften, wie z.B. Spektralbereich, Belichtungszeit (z.B. Blitz) usw. zur Messung phototroper oder photolytischer bzw. photosynthetischer Vorgänge; Elektrische Beeinflussung durch Gleich- und Wechselfelder, wie z.B. Kapillarelektrophorese; Magnetische Beeinflussungen, wie z.B. Zeeman-Effekt-Messungen; Temperatureinflüsse; radioaktive und Röntgenbestrahlung usw. Als chemische Einflüsse seien beispielsweise genannt: der Einsatz von aktivierten Kapillarabschnitten als Einwegküvetten für spezielle Diagnoseaufgaben im Bereich der Biomedizin. Dabei füllen sich die Kapillarabschnitte wegen der Kapillarwirkung von selbst. Die Proben können daneben vor oder während der Messung physikalisch behandelt werden.

Ein Beispiel für eine derartige Beeinflussung der Reaktionskinetik ist schematisch in den Fig. 19 und 20 dargestellt. Das aus dem Kapillarrohr 101 und den zur Einund Auskopplung der Strahlung dienenden Doppelkegeln 115 bestehende Kapillar-Küvettensystem ist mit dem zwischen den Ankopplungsstellen gelegenen Bereich des Kapillarrohres 101 durch eine Reaktionskammer 140 geleitet, welche mit Ellipsoid-Spiegeln 141, 142 versehen ist. In der Brennlinie des einen Ellipsoid-Spiegels 141 ist das Kapillarrohr, in der Brennlinie des anderen Ellipsoid-Spiegels ist eine Blitzlichtlampe 143 angeordnet. Das System ermöglicht die Untersuchung photochemischer Vorgänge.

Auch bei dieser Ausgestaltung erlauben die Doppelkegel mit verschiedenen Kegelwinkeln eine wahlweise Anpassung an zwei verschiedene Aperturen mit streng reversibler Wirkung. Die prinzipiell auch im koaxialen Betrieb einsetzbaren Doppelkegel entfalten aber bei der Schrägeinkopplung in Kapillaren ihre optimale Wirkung, da hier deren Lichtleiterfunktionen ausgenutzt werden. Die Vorteile der Schrägeinkopplung in sehr dünne Kapillaren erlauben es, daß der Lichtleitwert trotz des sehr kleinen Querschnitts auf beliebige Längen voll erhalten bleibt. Die Durchstrahlung der Probe ist durch die Zentralfokussierung an die angepaßte Apertur optimal. Ein ganz wesentlicher Vorzug liegt aber auch in der Tatsache, daß die Strömungsführung für die Messung nicht verändert werden muß, wodurch Peakverbreiterungen und Verschleppungsfehler ausgeschlossen sind. Als Einkopplungsmöglichkeiten kommen speziell in Betracht:

a) halbzylindrische Nut für zylindrische Kapillaren (was die beste Lösung darstellt) gemäß Fig. 14a;

b) Keilnuten für zylindrische Küvetten, Uberbrückung der Zwickel mit Immersion gemäß Fig. 14b;

c) angeschliffene Planfläche für prismatische oder abgeflachte Kapillaren gemäß Fig. 12c.

Die durch die Erfindung vorgeschlagene Kopplung über die Aperturwandlerkegel gewährleistet somit einen verlustfreien Übergang und berücksichtigt zusätzlich die unterschiedlichen Aperturverhältnisse in den Versorgungslichtleitern und in der Meßkapillare. Alle bisher erwähnten Methoden beziehen nämlich ihre Meßwerte direkt auf die eingestrahlte Energie. Diese ist somit selbst das Vehikel der gesuchten Meßgrößen und in aller Regel viel größer als diese. Wegen der bekannten Begrenzung des beherrschbaren Signal zu Rausch-Verhältnisses sind jedoch auch bei Anwendung der vorliegenden Erfindung die Nachweisgrenzen der Messung begrenzt.

So nützlich daher der damit erzielte Fortschritt bei diesen Messungen ist, der physikalisch wichtigste Gewinn dieser Einkoppelmethode liegt jedoch auf einem anderen Gebiet, das durch die folgenden beiden, eng verwandten Anwendungen illustriert wird. Sie betreffen die Raman- und die Fluoreszenz-Spektroskopie. Dabei wird die eingestrahlte Primärenergie von der Messung ausgeschlossen und zwar nicht nur, wie üblich, durch die spektrale Aufspaltung, sondern ganz überwiegend durch die spezielle, durch das Küvettensystem ermöglichte Strahlführung, wie dies im folgenden näher erläutert wird.

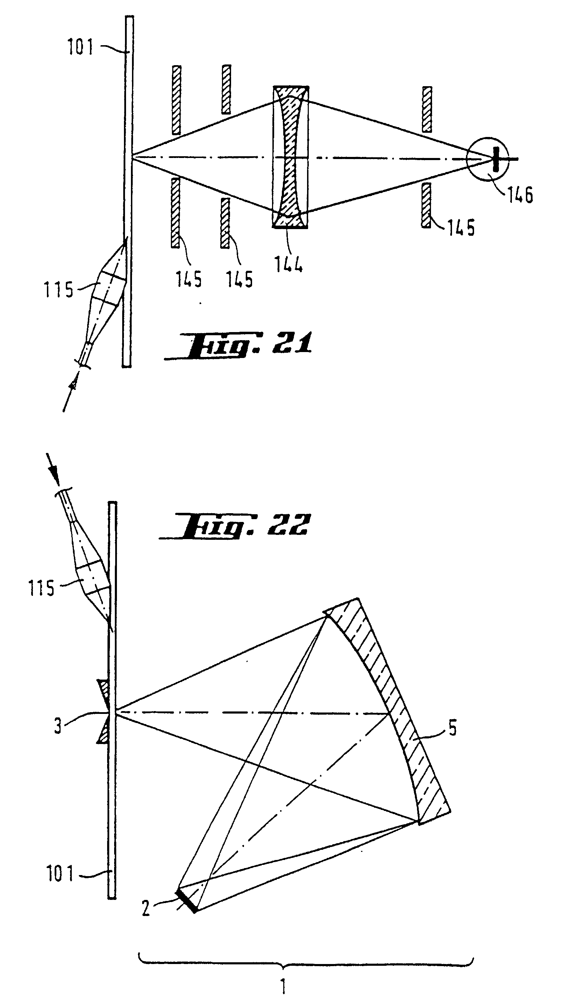

In die Kapillare als Probenträger wird die Anregungsstrahlung mit dem Kegel oder Doppelkegel eingekoppelt. Der Vorzug des Aperturwandlers ist, daß die Probe immer optimal bestrahlt wird, ob die Strahlung nun von einer Parallelquelle (Laser) kommt oder von einer Punktquelle. Wegen des Lichtleitereffekts bleibt jedoch die Anregungsstrahlung in die Kapillare gefesselt, während das unter 360° abgestrahlte Sekundärlicht die Kapillare senkrecht zur Achse ungehindert verläßt. Der auf diese Weise selbstleuchtende Stromfaden wird entweder zur integralen Fluoreszenzmessung direkt auf einen geeigneten Photoempfänger (Diode, Vervielfacher o.ä.) abgebildet, wie in Fig. 21 dargestellt, oder er bildet zur spektralen Emissionsmessung (Fluoreszenz- oder Raman-Strahlung) selbst den Eintrittsspalt eines Spektrometers, vorzugsweise eines Simultanspektrometers, wie in Fig. 22 gezeigt ist. Da man erreichen kann, daß jeweils nur der Stromfadenabschnitt zur Messung gelangt, der der Länge der Empfängerdiode auf der Diodenzeile entspricht, resultiert eine Peaklänge im 0,1 mm-Bereich und damit ein Peakvolumen von 1 Nanoliter und darunter.

Bei der in Fig. 21 gezeigten Anordnung zur integralen Messung der Fluoreszenzstrahlung, die von dem Küvettenrohr 101 austritt, wird das Fluoreszenzlicht, von einer Optik 134 und durch einige Blenden 135 begrenzt, einem Photoempfänger 136 zugeführt.

Bei der in Fig. 22 gezeigten Anordnung zur spektralen Messung der Fluoreszenz- oder Raman-Strahlung befindet sich das Küvettenrohr 101 am Eingangsspalt 3 eines Simultanspektrometers 1.

Das senkrechte Kapillarrohr 101 führt in seiner Achse das durchlaufende Probengut. Über den Aperturwandler 115 wird die Anregungsstrahlung z.B. von einer Laserdiode in die Kapillare eingekoppelt. Das zur Sekundärstrahlung angeregte Probengut in der Kapillare wirkt auf eine definierte kurze Strecke von z.B. 0,5 mm als selbstleuchtendes Spaltelement 3 eines Spektrometers 1, das beispielsweise ein holographisch erzeugtes Konkavgitter 5 und eine Diodenzeile 2 enthält, wie dies im einzelnen anhand der Fig. 1 bis 3 beschrieben ist. Die Anregungsstrahlung, welche die Probe optimal konzentrisch durchsetzt, kann wegen des Lichtleitereffekts nicht aus der Kapillare austreten, während die Sekundär-, also die Ramanoder Fluoreszenz-Strahlung, seitlich (senkrecht) austritt und auf die Gitterfläche trifft. Die Energieausnützung ist dabei optimal, weil einerseits die Leuchtdichte im Spalt 3 die höchstmögliche ist und andererseits keinerlei Verlustglieder im Übertragungsweg liegen. Bei einem Kapillarinnendurchmesser von 0,05 mm und einer genutzten Länge von 0,5 mm ergibt sich ein sogenanntes Peakvolumen von gerade 1 Nanoliter, ein Wert, der bisher von keiner anderen optischen Methode erreicht werden konnte.

Einen weiteren bevorzugten Aspekt der vorliegenden Erfindung stellt ein Mikro-Küvettensystem für die Absorptionsphotometrie dar, enthaltend ein zylindrisches Küvettenrohr mti einem Hohlkern und einer darin enthaltenen Probenflüssigkeit, die zumindest in einem Längsstück des Hohlkerns von einer Strahlung durchsetzt wird, deren Absorption anschließend gemessen wird, wobei das Küvettenrohr (101) und die Probenflüssigkeit (102) brechzahlmäßig so abgestimmt sind, so daß sie für die Strahlung als Stufen-Wellenleiter wirken, in welchem die Probenflüssigkeit (102) den Kern und die Wandung des Küvettenrohres (101) den Mantel bilden. Daneben kann die Strahlung an der Außenwand des Küvettenrohres (101) eine mehrfache Reflexion, vorzugsweise eine mehrfache Totalreflexion, erfahren und die Probenflüssigkeit von der Strahlung mehrfach durchsetzt werden.

Die Strahlung kann dabei dem aus Küvettenrohr und Probenflüssigkeit gebildeten Stufen-Wellenleiter mit einem Öffnungswinkel (103) zugeführt werden, welcher der maximalen Apertur des Stufen-Wellenleiters entspricht. Das oben genannte Küvettenrohr (101) kann aus einem isotropen, im interessierenden Spektralbereich absorptionsfreien Material bestehen. Daneben kann das Küvettenrohr (101) als kreiszylindrische Mikro-Kapillare mit einem Innendurchmesser von weniger als 0,5 mm, vorzugsweise weniger als 0,15 mm, und mit einem Außendurchmesser von weniger als 1,0 mm, vorzugsweise weniger als 0.35 mm, und noch bevorzugterweise weniger als 0,20 mm, ausgebildet sein.

In dem besagten Mikro-Küvettensystem kann ein reflexionsarmer Übergang zwischen Probenflüssigkeit (102) und Material des Küvettenrohres (101) stattfinden. Auf der Außenseite des oben angegebenen Küvettenrohres (101) kann, zumindest in Teilbereichen, eine Metallschicht aufgebracht sein.

Ein weiterer vorteilhafter Aspekt der vorliegenden Erfindung besteht in der An- und Auskopplung mittels eines Kegelkörpers (110), der vorzugsweise aus dem gleichen Material besteht wie das Küvettenrohr (101), der auf seinem Kegelmantel eine Nut (111) oder Abflachung (111) aufweist, wobei die Nut (111) vorzugsweise einen Krümmungsradius aufweist, der dem Außenradius des Küvettenrohres (101) entspricht, wobei das Küvettenrohr (101) unter Zwischenschaltung eines absorptionsfreien Mittels in der Nut derart gehaltert ist, daß im Falle der Strahlungsankopplung die Spitze des Kegelkörpers (110) in Richtung des Strahlungsdurchgangs und im Falle der Strahlungsauskopplung die Spitze des Kegelkörpers (110) entgegen der Richtung des Strahlungsgangs weist. Vorteilhaft is es dabei, wenn der Kegelkörper (110) kreiszylindrisch ausgebildet ist.

Dabei ist es besonders vorteilhaft, wenn der Winkel, den die Kegellängsachse mit dem Kegelmantel einschließt, kleiner oder gleich einem Viertel des maximalen Aperturwinkels des Stufen-Wellenleiters ist. Daneben ist es besonders vorteilhaft, wenn bei einem Kegelkörper (110) und einem Küvettenrohr (101) aus Quarz der Winkel, den die Kegellängsachse mit dem Kegelmantel einschließt, etwa 15° bis 22,5°, vorzugsweise etwa 22° bis 22,5° beträgt.

Daneben umfaßt die vorliegende Erfindung als vorteilhaften Aspekt ein Mikro-Küvettensystem, bei dem der Anschluß des Küvettensystems an eine Lichtquelle und/oder an eine Meßeinrichtung mittels eines Aperturwandlers (113) erfolgt, der jeweils aus einem koaxialen, kegelförmigen Lichtleiter oder Spiegel mit einer Lichteintritts- und einer Lichtaustrittsöffnung besteht, wobei die größere der Öffnungen jeweils dem Küvettenrohr (101) zugekehrt ist. Dabei kann der Aperturwandler (113) aus dem gleichen Material bestehen wie das Küvettenrohr (101) und gegebenenfalls der zur Ein- und/oder Auskopplung verwendete Kegelkörper (110). Die Lichteintrittsöffnung und die Lichtaustrittsöffnung des Aperturwandlers (113) können senkrecht zur optischen Achse verlaufende Querschnittsöffnungen sein.

Ein weiterer vorteilhafter Aspekt der vorliegenden Erfindung ergibt sich, wenn der jeweils kleineren Öffnung des Aperturwandlers (113) zumindest ein Stück eines vorzugsweise zylindrischen Lichtleiters (114) vorgeschaltet ist, dessen Querschnitt im Anlagebereich an den Aperturwandler (113) der kleineren Öffnung entspricht. Dies dient zur Ankopplung des Aperturwandlers (113) an eine Lichtquelle oder eine Meßvorrichtung. Der Lichtleiter (114) des besagten Mikro-Küvettensystems kann, zumindest zwischen seinen Endbereichen, als vorzugsweise flexibles Lichtleitkabel ausgebildet sein. Dabei kann auch zumindest eine Lichtleitfaser des Lichtleiters (114) aus dem gleichen Material bestehen wie das Küvettenrohr (101) und gegebenenfalls der Kegelkörper (110) und/oder der Aperturwandler (113). Ein weiterer vorteilhafter Aspekt besteht darin, daß die Austrittsapertur des Kegels größer ist als die Eintrittsapertur des Aperturwandlers.

Vorteilhaft ist es weiterhin, wenn die Verwendung von Quarz als Küvettenrohr, Kegel und Aperturwandler sowie gegebenenfalls als Lichtleiter der Winkel, den der Kegelmantel des Aperturwandlers (113) zu seiner Mittelachse einschließt, etwa 13° und der Winkel, den der Kegelmantel des Kegelkörpers (110) zu seiner Mittelachse einschließt, etwa 20° bis 22,5° beträgt. Daneben kann der Kegelkörper (110) und der zugehörige Aperturwandler (113) als vorzugsweise einstückiger Doppelkegel (115) ausgebildet sein. Außerdem kann zwischen Aperturwandler (113) und Kegelkörper (110) ein zylindrisches Teil (112) vorgesehen sein, welches die Austrittsfläche des Aperturwandlers (113) an die Eintrittsfläche des Kegelkörpers (110) ankoppelt. Der zumindest eine Doppelkegel (115) im zylindrischen Teil (112) kann dabei vorzugsweise über punktuelle Anlageflächen (118,119,120) gehaltert sein.

Ein weiterer vorteilhafter Aspekt besteht in einem Mikro-Küvettensystem bei dem zwei Kegelkörper (115) derart beabstandet voneinander angeordnet sind, daß ihre Nuten (111) miteinander fluchten und nach oben gekehrt sind, und daß in den Nuten das Küvettenrohr (101) liegt. Dabei kann zumindest einer der Kegelkörper (115) längs des Küvettenrohres (101) verschiebbar sein. Dies dient zur Einstellung der optischen Weglänge und/oder des einer Absorptionsmessung zuzuführenden Längsstückes des Küvettenrohres (101). Dabei kann zumindest einer der Doppelkegel (115) verschiebbar gelagert sein.

Die Verwendung des Mikro-Küvettensystems in einem spektroskopischen System stellt einen weiteren, besonders vorteilhaften Aspekt der vorliegenden Erfindung dar. Das Mikro-Küvettensystem kann daneben auch in der Absorptionsspektrometrie, insbesondere von schwach absorbierenden Flüssigkeiten, sowie in der HPLC verwendet werden.

Daneben umfaßt die vorliegende Erfindung als einen weiteren vorteilhaften Aspekt ein spektroskopisches System, in welchem zumindest eine Probe mittels von einer Lichtquelle ausgehendem Licht beleuchtet und das von der Probe ausgehende Licht auf den Eintrittsspalt zumindest eines Spektrometers, insbesondere eines Simultanspektrometers, gebündelt wird, wobei im Objektraum zwischen der Lichtquelle (131) bzw. deren Bild (133) und dem Eintrittsspalt des Spektrometers (136) ein Mikro-Küvettensystem (101,115,134,135) enthalten ist. In dem spektroskopischen System kann als Beleuchtungsanordnung eine punktförmige oder quasi punktförmige Lichtquelle (131) verwendet werden, die mittels eines asphärischen, vorzugsweise eines Ellipsoid-Spiegels, auf die Eintrittsöffnung (133) eines zwischen Lichtquelle und Objekt angeordneten Aperturwandlers oder eines diesem vorgeschalteten Lichtleiters (134) abgebildet ist.

Daneben kann in dem spektroskopischen System als Spektrometer eine aus einem Beugungsgitter und einer Empfängereinheit bestehende Anordnung verwendet werden. Dabei kann als Beugungsgitter ein holographisches Konkavgitter und als Empfänger eine Photodiodenzeile dienen. Besonders vorteilhaft ist es, wenn der Spiegel der Beleuchtungseinrichtung und das Konkavgitter des Spektrometers die gleiche Apertur aufweisen. Ein weiterer vorteilhafter Aspekt ergibt sich durch die Anordnung des Mikro-Küvettensystems (101) in einem Reaktionsraum (140) des spektroskopischen Systems, wobei physikalische Einflüsse auf die Probe zur Einwirkung gebracht werden können. Besonders vorteilhaft ist es, wenn in dem spektroskopischen System aktivierte, vorzugsweise zum einmaligen Gebrauch vorgesehene Kapillarabschnitte die Mikroküvetten bilden.

Einen weiteren vorteilhaften Aspekt der vorliegenden Erfindung stellt ein spektroskopisches System dar, bei dem das Mikro-Küvettensystem (101) als Strahlenquelle für eine Sekundärstrahlung dient, welche von einer vorzugsweise durch Schrägeinkopplung in die Küvette eingespeisten Primärstrahlung angeregt ist. Dabei kann als Sekundärstrahlung eine Fluoreszenzstrahlung dienen, welche von einem Photoempfänger (146) gemessen wird. Als Sekundärstrahlung kann daneben auch eine Fluorszenz- oder Raman-Strahlung dienen, wobei die Kapillarküvette den Eintrittsspalt (3) eines Spektrometers (1), vorzugsweise eines Simultanspektrometers, bildet oder im Eintrittsspalt angeordnet bzw. auf diesem abgebildet ist.

**Patentansprüche**

1. Spektroskopisches System zur Durchführung der Mikroanalytik, insbesondere der HPLC, in welchem zumindest eine Probe mittels von einer Lichtquelle ausgehendem Licht gerichtet beleuchtet und das von der Probe ausgehende Licht auf den Eintrittsspalt zumindest eines Spektrometers, insbesondere eines Simultanspektrometers, gebündelt wird, wobei zur optischen Energieübertragung im Objektraum zwischen der Lichtquelle bzw. deren Bild und der Probe und zwischen der Probe und dem Eintrittsspalt je ein Aperturwandler, also ein Eingangs- und ein Ausgangswandler, vorgesehen ist, der jeweils aus einem koaxialen, kegelförmigen Lichtleiter oder Spiegel mit einer Lichteintritts- und einer Lichtaustrittsöffnung besteht, wobei die größere der Öffnungen jeweils der Probe zugekehrt ist, und als Beleuchtungsanordnung (6) eine punktförmige Lichtquelle (L) verwendet ist, die mittels eines

EP 0 772 029 B1

asphärischen, vorzugsweise eines Ellipsoid-Spiegels (7) auf die Eintrittsöffnung des zwischen Lichtquelle und Objekt (9) angeordneten Aperturwandlers (14) oder des diesem vorgeschalteten Lichtleiters (12) abgebildet ist, **dadurch gekennzeichnet, daß** als Spektrometer (1) eine aus einem Beugungsgitter (5) und einer Empfängereinheit (2) bestehende Anordnung verwendet wird, und daß die Probe (9) in einer zwischen den Aperturwandlern (14, 15) längs der optischen Achse angeordneten Kapillarküvette aufgenommen ist, wobei der halbe Kegelwinkel β des Eingangsaperturwandlers derart gewählt ist, sowie die Kapillarküvette derart angeordnet ist, daß die Kapillarküvette in Längsrichtung mit geringer Strahlenneigung gegen die optische Achse durchstrahlt wird.

**2.** System nach Anspruch 1, **dadurch gekennzeichnet, daß** die Lichteintrittsöffnung und die Lichtaustrittsöffnung des Aperturwandlers (14, 15; 25) senkrecht zur optischen Achse verlaufende Querschnittsöffnungen sind.

**3.** System nach einem der vorstehenden Ansprüche, **dadurch gekennzeichnet, daß** eine totalreflektierende Außenfläche jedes Kegels von jedem Aperturwandler (14, 15) von einem hermetisch abgeschlossenem Hohlraum (30) umschlossen ist, dessen Wandungen (31) vorzugsweise aus dem gleichen Material bestehen wie die Kegel selbst.

**4.** System nach einem der vorstehenden Ansprüche, **dadurch gekennzeichnet, daß** der Aperturwandler (14, 15) vorzugsweise an seiner größeren Öffnung mit einer Korrekturlinse (32) versehen ist.

**5.** System nach einem der Ansprüche 2 bis 4, **dadurch gekennzeichnet, daß** der kleineren Öffnung des Aperturwandlers zumindest ein Stück eines vorzugsweise zylindrischen Lichtleiters (12 ,13; 26) vorgeschaltet ist, dessen Querschnitt im Anlagebereich an den Aperturwandler (14, 15; 25) der kleineren Öffnung entspricht, zur Ankopplung des Aperturwandlers (14, 15; 25) an die Lichtquelle (L) bzw. deren Bild (L') oder den Eintrittsspalt (3).

**6.** System nach einem der Ansprüche 1, 2, 3 und 5, **dadurch gekennzeichnet, daß** der größeren Öffnung des Aperturwandlers (14, 15) ein Stück (16) eines vorzugsweise zylindrischen Lichtleiters vorgeschaltet ist, dessen Querschnitt im Anlagebereich an den Aperturwandler (14, 15) der größeren Öffnung entspricht, zur direkten Ankopplung des Aperturwandlers (14, 15) an die Probe (9).

**7.** System nach einem der Ansprüche 3 bis 6, **dadurch gekennzeichnet, daß** das dem jeweiligen Ende des Aperturwandlers (14 ,15; 25) vorgeschaltete Stück eines zylindrischen Lichtleiters (12, 13, 16, 26) oder eine Linse (32) aus dem gleichen Material besteht wie der Aperturwandler (14, 15; 25).

**8.** System nach Anspruch 5 oder einem der von Anspruch 5 abhängigen Ansprüche, **dadurch gekennzeichnet, daß** der Lichtleiter (12, 13, 26) als optisches Faserbündel ausgebildet ist.

**9.** System nach einem der vorstehenden Ansprüche, mit Eignung für die UV-Spektroskopie, **dadurch gekennzeichnet, daß** die Aperturwandler (14, 15; 25) und gegebenenfalls die den Hohlraum (30) begrenzende Hülle (31) Quarztrichter sind, und/oder den Aperturwandlern (14, 15; 25) gegebenenfalls vorgeschaltete Lichtleiter (12, 13, 16, 26) ebenfalls aus Quarz bestehen.

**10.** System nach einem der vorhergehenden Ansprüche, **dadurch gekennzeichnet, daß** als Beugungsgitter (5) ein holographisches Konkavgitter und als Empfänger eine Photodiodenzeile (2) dienen.

**11.** System nach Anspruch 10, **dadurch gekennzeichnet, daß** der Spiegel (7) der Beleuchtungseinrichtung (1) und das Konkavgitter (5) des Spektrometers (1) die gleiche Apertur aufweisen, wobei eine 1:1-Abbildung der Lichtquelle (L) auf die Dioden der Photodiodenzeile (2) bevorzugt wird.

**12.** System nach einem der vorstehenden Ansprüche, **dadurch gekennzeichnet, daß** am Ein- und Ausgang der Meßküvette ein Aperturwandler (14, 15) mit seiner größeren Öffnung angeschlossen ist.

**13.** System nach Anspruch 12, **dadurch gekennzeichnet, daß** die zumindest eine Küvette als Durchflußküvette ausgebildet ist.

**14.** System nach einem der vorstehenden Ansprüche, **dadurch gekennzeichnet, daß** im Objektraum (8) eine Interferometeranordnung (20, 21, 22) vorgesehen ist.

**15.** System nach Anspruch 14, **dadurch gekennzeichnet, daß** eine Meßküvette (21) und eine Vergleichsküvette (22) vorgesehen sind.

16. System nach Anspruch 15, **dadurch gekennzeichnet, daß** zumindest ein Strahlenteiler (48) vorgesehen ist, um das von dem Eingangs-Aperturwandler (14) zugeführte Meßlicht den Eingängen der Meßküvette (21) und der Vergleichsküvette (22) zuzuführen, und um das am entgegengesetzten Ende der Meßküvette (21) und der Vergleichsküvette (22) reflektierte Licht nach abermaligem Durchgang durch diese Küvetten dem Ausgangs-Aperturwandler (15) zuzuführen.

17. System nach Anspruch 16, insbesondere zur Bestimmung der Dispersion von in einem Lösungsmittel gelösten Substanzen, wobei die Meßküvette die Lösung und die Vergleichsküvette das Lösungsmittel enthält, **dadurch gekennzeichnet, daß** eine weiße Lichtquelle verwendet wird, und daß mit dem in dem Ausgangs-Aperturwandler gesammelten Licht Interferenzmuster in der Empfängerebene des Spektrometers (1) erzeugt werden, aus denen die Dispersion berechenbar ist, wobei bevorzugt ein Kösters'sches Prisma (48) als Strahlenteiler verwendet wird.

18. System nach einem der Ansprüche 1 bis 13, **dadurch gekennzeichnet, daß**, in Richtung des Beleuchtungsstrahlengangs gesehen, vor der zu untersuchenden Probe (9) eine Polarisationseinrichtung (23) und hinter der zu untersuchenden Probe eine Analysatoreinrichtung (24) zur Durchführung einer Polarisations-Spektroskopie vorgesehen sind, und daß an die Analysatoreinrichtung (24) über je einen Aperturwandler (15, 25) ein Spektrometer angeschlossen ist zur Bestimmung der Rotationsdispersion und des Absorptionsspektrums der Probe aus den von den Spektrometern erhaltenen Photoströmen $\Phi(x)_1$ und $\Phi(x)_2$.

19. System nach einem der Ansprüche 1 bis 13, **dadurch gekennzeichnet, daß** das von dem Eingangs-Aperturwandler austretende Licht mittels zumindest eines Strahlenteilers (52) in zwei Strahlenbündel aufgespalten wird, die über zumindest einen Polarisator senkrecht zueinander polarisiert werden und anschließend über je ein Phasenverzögerungsglied ($CP_C$ und $CP_R$) eine gegensinnige Circularpolarisation erfahren, und daß die derart circularpolarisierten Strahlenbündel nach Durchlauf von zumindest einer Meßküvette über je einen Ausgangs-Aperturwandler je einem Spektrometer, vorzugsweise einem Simultanspektrometer, zugeführt sind zur Bestimmung des Circular-Dichroismus und des Absorptionsspektrums aus den beiden Photoströmen ($Ph_L$ und $Ph_R$), wobei bevorzugt ein Glan-Prisma (52) verwendet wird, welches derart als Strahlenteiler wirkt, daß die beiden aus ihm austretenden Strahlenbündel senkrecht zueinander polarisiert sind.

**Claims**

1. Spectroscopic system for conducting micro-analytical procedures, particularly HPLC, wherein at least one sample is directionally illuminated by light emitted from a light source, and the light coming from the sample is concentrated on the entrance slit of at least one spectrometer, particularly a simultaneous spectrometer, wherein for optical energy transfer aperture changers are provided in the object space between the light source or the image thereof and the sample and between the sample and the entrance slit, respectively, i.e. an inlet aperture changer and an outlet aperture changer, said respective aperture changers consisting of a coaxial, cone-shaped light guide or mirror having a light entry port and a light exit port, the larger one of the ports respectively facing the sample, comprising the features that the lighting unit (6) is a point source of light (L) which is imaged, by means of an aspherical mirror, preferably an ellipsoidal mirror (7), onto the entry port of the aperture changer (14) arranged between the light source and the object (9) or of the light guide (12) connected before said aperture changer, **characterized in that** an arrangement consisting of a grating (5) and a receiver unit (2) is used as a spectrometer (1), and **in that** the sample (9) is contained in a capillary cell which is located between the aperture changers (14, 15) in a longitudinal direction of the optical axis, wherein half the cone angle β of the inlet aperture changer is selected in such a way and the capillary cell is arranged in such a way that the capillary cell in the longitudinal direction is shown through against the optical axis with a low beam inclination.

2. System according to claim 1, **characterized in that** the light entry port and the light exit port of the aperture changer (14, 15; 25) are cross-sectional openings normal to the optical axis.

3. System according to any one of the preceding claims, **characterized in that** a totally reflecting outer surface of each cone of each aperture changer (14, 15) is enclosed by a hermetically sealed hollow space (30) whose walls (31) are preferably made of the same material as the cones.

4. System according to any one of the preceding claims, **characterized in that** the aperture changer (14, 15) is preferably provided, at the larger opening thereof, with a correction lens (32).

5. System according to any one of claims 2 to 4, **characterized in that** at least a portion of a preferably cylindrical light guide (12, 13; 26) is connected before the smaller opening of the aperture changer, the cross-section of said light-guide portion in the area of contact with the aperture changer (14, 15; 25) corresponding to said smaller opening, for coupling the aperture changer (14, 15; 25) to the light source (L) or the image (L') thereof or to the entrance slit (3).

6. System according to any one of claims 1, 2, 3 and 5, **characterized in that** a portion (16) of a preferably cylindrical light guide is connected before the larger opening of the aperture changer (14, 15), the cross-section of said light-guide portion in the area of contact with the aperture changer (14, 15) corresponding to said larger opening, for directly coupling the aperture changer (14, 15) to the sample (9).

7. System according to any one of claims 3 to 6, **characterized in that** the portion of a cylindrical light guide (12, 13, 16, 26) connected before the respective end of the aperture changer (14, 15; 25) or a lens (32) are made of the same material as the aperture changer (14, 15; 25).

8. System according to claim 5 or any claim dependent on claim 5, **characterized in that** the light guide (12, 13, 26) is in the form of an optical fiber bundle.

9. System according to any one of the preceding claims, which is adapted for use in UV spectroscopy, **characterized in that** the aperture changers (14, 15; 25) and, if applicable, the enclosure (31) defining the hollow space (30) are quartz funnels, and/or light guides (12, 13, 16, 26) connected before the aperture changers (14, 15; 25), if applicable, are also made of quartz.

10. System according to one of the preceding claims, **characterized in that** a holographical concave grating serves as grating (5) and a photodiode row (2) serves as a receiver.

11. System according to claim 10, **characterized in that** the mirror (7) of the lighting unit (6) and the concave grating (5) of the spectrometer (1) have the same aperture, wherein a 1:1 projection of the light source (L) onto the diodes of the photodiode row (2) is preferred.

12. System according to any one of the preceding claims, **characterized in that** an aperture changer (14, 15) is connected, at the larger opening thereof, to the inlet and the outlet of the measuring cell.

13. System according to claim 12, **characterized in that** said at least one cell is a flow-through cell.

14. System according to any one of preceding claims, **characterized in that** an interferometer arrangement (20, 21, 22) is provided in the object space (8).

15. System according to claim 14, **characterized in that** there are provided a measuring cell (21) and a reference cell (22).

16. System according to claim 15, **characterized in that** at least one beam splitter (48) is provided to supply the measuring light from the inlet aperture changer (14) to the inlets of the measuring cell (21) and the reference cell (22) and to supply the light reflected at the opposite end of the measuring cell (21) and the reference cell (22) after another passage through said cells to the outlet aperture changer (15).

17. System according to claim 16, particularly for determining the dispersion of substances dissolved in a solvent, wherein the measuring cell contains the solution and the reference cell contains the solvent, **characterized in that** a white light source is used, and that interference patterns are generated in the receiving plane of the spectrometer (1) with the light collected in the outlet aperture changer, from which patterns the dispersion can be calculated, wherein a Köster prism (48) is preferably used as the beam splitter.

18. System according to any one of claims 1 to 13, **characterized in that**, in the direction of the illuminating beam, a polarizing device (23) is provided before the sample (9) to be tested, and an analyzing device (24) is provided behind the sample to be tested, for conducting polarization spectroscopy, and that a spectrometer is connected to the analyzing device (24) via respective aperture changers (15, 25) for determining the rotary dispersion and the absorption spectrum of the sample on the basis of the photocurrents $\Phi(x)_1$ and $\Phi(x)_2$ from the spectrometers.

**19.** System according to any one of claims 1 to 13, **characterized in that** the light emerging from the inlet aperture changer is divided into two bundles of rays by at least one beam splitter (52), said two bundles of rays being polarized orthogonally to each other by at least one polarizer and subsequently being subjected to circular polarization in the opposite direction by respective phase retardation members ($CP_L$ and $CP_R$), and that the circularly polarized bundles of rays are supplied, after passing through at least one measuring cell, via respective outlet aperture changers to respective spectrometers, preferably a simultaneous spectrometer, for determining the circular dichroism and the absorption spectrum on the basis of the two photocurrents ($Ph_L$ and $Ph_R$), wherein preferably a Glan prism (52) is used which acts as a beam splitter such that the two bundles of rays emerging therefrom are orthogonally polarized to each other.

**Revendications**

**1.** Système spectroscopique pour effectuer des micro-analyses, en particulier la chromatographie en phase liquide sous haute pression (HPLC), dans lequel au moins un échantillon est illuminé de façon directive au moyen d'une lumière émanant d'une source lumineuse et la lumière émanant de l'échantillon est focalisée sur la fente d'entrée d'au moins un spectromètre, en particulier d'un spectromètre simultané, et dans lequel est prévu un convertisseur d'ouverture respectif, donc un convertisseur d'entrée et un convertisseur de sortie, pour la transmission d'énergie optique dans l'espace objet entre la source lumineuse ou son image et l'échantillon et entre l'échantillon et la fente d'entrée, convertisseurs qui sont constitués chacun par un guide optique ou un miroir coaxial conique comportant une ouverture d'entrée de lumière et une ouverture de sortie de lumière, la plus grande des ouvertures étant tournée vers l'échantillon, et dans lequel une source lumineuse ponctuelle (L) est utilisée à titre d'agencement d'éclairage (6) qui est projetée au moyen d'un miroir (7) asphérique, de préférence ellipsoïdal, sur l'ouverture d'entrée du convertisseur d'ouverture (14) agencé entre la source lumineuse et l'objet (9) ou du guide optique (12) agencé en amont de ce convertisseur, **caractérisé en ce qu'**il est prévu à titre de spectromètre (1) un agencement constitué par un réseau de diffraction (5) et par une unité réceptrice (2), et **en ce que** l'échantillon (9) est reçu dans une cuvette capillaire agencée entre les convertisseurs d'ouverture (14, 15) le long de l'axe optique, le demi-angle conique β du convertisseur d'ouverture d'entrée étant choisi de telle sorte et la cuvette capillaire étant agencée de telle sorte que la cuvette capillaire est traversée par la lumière en direction longitudinale avec une faible inclinaison des rayons par rapport à l'axe optique.

**2.** Système selon la revendication 1, **caractérisé en ce que** l'ouverture d'entrée de lumière et l'ouverture de sortie de lumière du convertisseur d'ouverture (14, 15 ; 25) sont des ouvertures de section s'étendant perpendiculairement à l'axe optique.

**3.** Système selon l'une des revendications précédentes, **caractérisé en ce qu'**une surface extérieure totalement réfléchissante de chaque cône de chaque convertisseur d'ouverture (14, 15) est entourée par une cavité (30) hermétiquement refermée dont les parois (31) sont constituées de préférence du même matériau que les cônes eux-mêmes.

**4.** Système selon l'une des revendications précédentes, **caractérisé en ce que** le convertisseur d'ouverture (14, 15) est pourvu d'une lentille de correction (32) de préférence au niveau de son ouverture plus grande.

**5.** Système selon l'une des revendications 2 à 4, **caractérisé en ce qu'**en amont de l'ouverture plus petite du convertisseur d'ouverture est prévu au moins un morceau d'un guide optique de préférence cylindrique (12, 13 ; 26) dont la section dans la zone d'appui contre le convertisseur d'ouverture (14, 15 ; 25) correspond à l'ouverture plus petite, afin de coupler le convertisseur d'ouverture (14, 15; 25) à la source lumineuse (L) ou à son image (L') ou à la fente d'entrée (3).

**6.** Système selon l'une des revendications 1, 2, 3 et 5, **caractérisé en ce qu'**en amont de l'ouverture plus grande du convertisseur d'ouverture (14, 15) est prévu au moins un morceau (16) d'un guide optique de préférence cylindrique dont la section dans la zone d'appui contre le convertisseur d'ouverture (14, 15) correspond à l'ouverture plus grande, afin de coupler directement le convertisseur d'ouverture (14, 15) à l'échantillon (9).

**7.** Système selon l'une des revendications 3 à 6, **caractérisé en ce que** le morceau, agencé en amont de l'extrémité respective du convertisseur d'ouverture (14, 15 ; 25), d'un guide optique cylindrique (12, 13, 16, 26) ou une lentille (32) est constitué(e) du même matériau que le convertisseur d'ouverture (14, 15 ; 25).

8. Système selon la revendication 5 ou selon l'une des revendications prises en dépendance de la revendication 5, **caractérisé en ce que** le guide optique (12, 13 ; 26) est réalisé sous forme de faisceau de fibres optiques.

9. Système selon l'une des revendications précédentes, approprié à la spectroscopie ultraviolette, **caractérisé en ce que** les convertisseurs d'ouverture (14, 15 ; 25) et le cas échéant l'enveloppe (31) délimitant la cavité (30) sont des entonnoirs en quartz, et/ou les guides optiques (12, 13, 16, 26) le cas échéant agencés en amont des convertisseurs d'ouverture (14, 15 ; 25) sont également constitués en quartz.

10. Système selon l'une des revendications précédentes, **caractérisé en ce qu'**une grille concave holographique sert de réseau de diffraction (5), et une ligne de photodiodes (2) sert de récepteur.

11. Système selon la revendication 10, **caractérisé en ce que** le miroir (7) du dispositif d'éclairage (1) et la grille concave (5) du spectromètre (1) présentent la même ouverture, une représentation 1:1 de la source lumineuse (L) sur les diodes de la ligne de photodiodes (2) étant préférable.

12. Système selon l'une des revendications précédentes, **caractérisé en ce qu'**un convertisseur d'ouverture (14, 15) est raccordé par son ouverture plus grande à l'entrée et à la sortie de la cuvette de mesure.

13. Système selon la revendication 12, **caractérisé en ce que** ladite au moins une cuvette est réalisée sous forme de cuvette traversante.

14. Système selon l'une des revendications précédentes, **caractérisé en ce qu'**un agencement interféromètre (20, 21, 22) est prévu dans l'espace objet (8).

15. Système selon la revendication 14, **caractérisé en ce qu'**il est prévu une cuvette de mesure (21) et une cuvette de comparaison (22).

16. Système selon la revendication 15, **caractérisé en ce qu'**il est prévu au moins un élément de fractionnement des rayons (48) pour amener la lumière de mesure amenée par le convertisseur d'ouverture d'entrée (14) aux entrées de la cuvette de mesure (21) et de la cuvette de comparaison (22), et pour amener la lumière réfléchie à l'extrémité opposée de la cuvette de mesure (21) et de la cuvette de comparaison (22), après un nouveau passage à travers ces cuvettes, au convertisseur d'ouverture de sortie (15).

17. Système selon la revendication 16, en particulier pour déterminer la dispersion de substances dissoutes dans un agent solvant, la cuvette de mesure contenant la solution et la cuvette de comparaison contenant l'agent solvant, **caractérisé en ce que** l'on utilise une source de lumière blanche, et **en ce que** l'on génère des motifs d'interférence dans le plan récepteur du spectromètre (1) avec la lumière accumulée dans le convertisseur d'ouverture de sortie, motifs à partir desquels on peut calculer la dispersion, en utilisant de préférence un prisme de Köster (48) à titre d'élément de fractionnement des rayons.

18. Système selon l'une des revendications 1 à 13, **caractérisé en ce qu'**en avant de l'échantillon à analyser (9), vu en direction de la propagation des rayons d'éclairage, on prévoit un dispositif de polarisation (23) et en arrière de l'échantillon à analyser on prévoit un dispositif analyseur (24) pour effectuer une spectroscopie de polarisation, et **en ce qu'**un spectromètre est branché via un convertisseur d'ouverture respectif (15, 25) au dispositif analyseur (24), afin de déterminer la dispersion de rotation et du spectre d'absorption de l'échantillon à partir des courants photoélectriques $\Phi(x)_1$ et $\Phi(x)_2$ reçus des spectromètres.

19. Système selon l'une des revendications 1 à 13, **caractérisé en ce que** la lumière sortant du convertisseur d'ouverture d'entrée est fractionnée en deux faisceaux de rayons au moyen d'au moins un élément de fractionnement des rayons (52), qui sont polarisés perpendiculairement l'un à l'autre via au moins un polarisateur et qui subissent ensuite une polarisation circulaire en sens opposés via un organe retardateur de phase respectif ($CP_C$ et $CP_R$), et **en ce que** les faisceaux de rayons ainsi polarisés circulaires sont amenés, après avoir traversé au moins une cuvette de mesure, via un convertisseur d'ouverture de sortie respectif à un spectromètre respectif, de préférence à un spectromètre simultané, pour déterminer de dichroïsme circulaire et le spectre d'absorption à partir des deux courants photoélectriques ($Ph_L$ et $Ph_R$), en utilisant de préférence un prisme de Glan (52) qui fait office d'élément de fractionnement de rayons de telle sorte que les deux faisceaux de rayons sortant hors de celui-ci sont polarisés perpendiculairement l'un à l'autre.

Fig: 1

EP 0 772 029 B1

## Fig. 2

Fig. 3

EP 0 772 029 B1

EP 0 772 029 B1

14 ,15

2β

Fig. 4·a

Fig. 4·b

2β

14 ,15

26

30    31

2β

Fig. 4·c

14 , 15

33

Fig. 4·d

30    31

32

2β

14 , 15

33

Fig. 5a

Fig. 5b

**Fig: 5 c**

∢ 5,0°

14,''

12

9

**Fig: 5 d**

∢ 4,5°

14,'''

12

9

EP 0 772 029 B1

**Fig. 6**

**Fig. 7**

Fig. 8a

*Fig. 8b*

Fig. 9

EP 0 772 029 B1

Fig. 10

Fig. 11

Fig. 12 a

Fig. 12 b

Fig. 12 c

Fig. 13

Fig. 14

Fig. 15

Fig. 16

_Fig. 17_

_Fig. 18_

_Fig. 19_

_Fig. 20_

Fig. 21

Fig. 22